(19) Europäisches Patentamt
European Patent Office
Office européen des brevets

(11) **EP 2 452 204 B1**

(12) **FASCICULE DE BREVET EUROPEEN**

(45) Date de publication et mention
de la délivrance du brevet:
**22.11.2017  Bulletin 2017/47**

(51) Int Cl.:
*G01S 13/00* *(2006.01)*     *G01S 13/87* *(2006.01)*
*G01S 13/72* *(2006.01)*

(21) Numéro de dépôt: **09780391.0**

(22) Date de dépôt: **09.07.2009**

(86) Numéro de dépôt international:
**PCT/EP2009/058769**

(87) Numéro de publication internationale:
**WO 2011/003453 (13.01.2011 Gazette 2011/02)**

(54) **TRAITEMENT DE DONNEES MULTI-CIBLES POUR RADARS PASSIFS MULTI-STATIQUES ET MULTI-CANAUX**

MULTI-TARGET-DATENVERARBEITUNG FÜR MULTISTATISCHEN UND MULTIKANAL-PASSIVRADAR

MULTI-TARGET DATA PROCESSING FOR MULTI-STATIC AND MULTI-CHANNEL PASSIVE RADARS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(43) Date de publication de la demande:
**16.05.2012   Bulletin 2012/20**

(73) Titulaire: **Thales**
**92400 Courbevoie (FR)**

(72) Inventeurs:
• **ALLAM, Sébastien**
**F-92160 Antony (FR)**
• **GREVERIE, Wilfried**
**F-75016 Paris (FR)**
• **DE GRAMONT, Emmanuel**
**F-75017 Paris (FR)**
• **DELTOUR, Jean-Claude**
**F-94260 Fresnes (FR)**
• **KLEIN, Mathieu**
**F-91190 Gif sur Yvette (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A-2008/071777     FR-A- 2 882 442**
**US-A1- 2003 048 224     US-A1- 2004 075 605**
**US-A1- 2004 233 105**

• HOWLAND P E ET AL: "FM radio based bistatic radar - Passive radar systems" IEE PROCEEDINGS: RADAR, SONAR & NAVIGATION, INSTITUTION OF ELECTRICAL ENGINEERS, GB, vol. 152, no. 3, 3 juin 2005 (2005-06-03), pages 107-115, XP006024052 ISSN: 1350-2395
• MORABITO A N ET AL: "Improved computational performance for distributed passive radar processing through channelised data - Passive radar systems" IEE PROCEEDINGS: RADAR, SONAR & NAVIGATION, INSTITUTION OF ELECTRICAL ENGINEERS, GB, vol. 152, no. 3, 3 juin 2005 (2005-06-03), pages 179-184, XP006024046 ISSN: 1350-2395

## Description

La présente invention concerne le domaine du pistage radar et, en particulier le domaine des systèmes multistatiques mettant en oeuvre un radar passif et plusieurs émetteurs d'opportunités formant avec ce radar différentes bases bistatiques. Elle concerne tout particulièrement les systèmes comportant les radars passifs avec plusieurs. Un tel système est par exemple divulgué dans la demande de brevet US2004/075605. Lorsque l'on effectue la couverture radar d'une zone géographique donnée à l'aide d'un radar passif, le problème principal qui se présente consiste dans la difficulté que l'on rencontre à utiliser de manière conjointe les informations élaborées à partir des signaux reçus, sachant que ces signaux peuvent avoir pour origine l'un ou l'autre des émetteurs d'opportunité dont les émissions couvrent partiellement ou totalement la zone observée par le radar.

De manière générale ces informations sont matérialisées, de manière connue, sous formes de pistes qui figurent la progression dans l'espace observé des objets d'intérêt détectés par le radar.

De manière générale également, les pistes élaborées par le radar sont entretenues par les plots fournis de manière périodique par le radar considéré. Un plot, représente les informations extraites des signaux reçus. Ces informations sont en particulier les informations de vitesse et de position, relatives pour un instant de mesure donné aux caractéristiques d'un objet détecté par ce radar. L'ensemble des plots successifs constitués au fil du temps pour un même objet détecté est ainsi utilisé pour former et entretenir la piste elle-même, une piste pouvant être exploitée de manière manuelle par l'intermédiaire d'un système de visualisation, ou de manière automatique. De la sorte, à chaque instant de mesure le radar reçoit des signaux émanant de l'un ou l'autre des émetteurs d'opportunité, chaque émetteur émettant sur une bande de fréquences généralement distincte. Cette bande est par ailleurs susceptible d'être composée de plusieurs sous-bandes disjointes, ou canaux, exploités simultanément par l'émetteur. Dans un tel cas le récepteur du radar forme un nombre de canaux de réception approprié à la réception de l'ensemble des canaux couverts par l'ensemble des émetteurs.

De manière connue, le radar traite ensuite séparément le signal reçu sur chaque canal et élabore, pour chaque canal et pour chaque objet détecté, un plot qui est associé le cas échéant aux plots relatifs au même objet et élaborés aux instants de mesure précédents. La succession des plots constitue la piste relative à l'objet détecté pour le canal considéré.

Par suite, un même objet se trouvant dans une partie de l'espace couverte par les émissions de plusieurs émetteurs d'opportunité, peut être détecté par le radar sur plusieurs canaux de réception. Ainsi, en combinant les informations élaborées à partir des différents canaux de réception, il est possible d'affiner la détermination des paramètres caractérisant l'objet détecté.

Une gestion correcte de l'espace consiste donc en particulier à détecter les pistes correspondant à un même objet et à associer ces pistes pour bénéficier de leur complémentarité en termes d'information.

Cependant, la combinaison de ces différentes observations n'est pas immédiate. En effet le radar passif forme avec chaque émetteur d'opportunité une base bistatique indépendante des autres bases, et les informations élaborées, les informations de position et de vitesse notamment, sont référencées dans le repère "émetteur- radar" associé à cette base. Par suite, pour effectuer une exploitation conjointe des informations élaborées par chacune des bases bistatiques et relative à un même objet, il est nécessaire de déterminer lesquelles des informations disponibles peuvent être attribuées à ce même objet et pouvant par conséquent être associées.

Le problème général posé consiste donc à trouver un moyen de réaliser de manière automatique l'association des plots bistatiques délivrés sur les différents canaux de réception, et/ou différentes bases bistatiques, qui correspondent à un même objet, et de fournir à l'organe de gestion du radar un ensemble de pistes globales dans lequel chaque piste représente un objet différent.

Un but de l'invention est de résoudre ce problème pour pouvoir réaliser des systèmes de détection formés de radars passifs qui tirent parti des émissions émanant des émetteurs d'opportunité et pouvant couvrir la zone de détection considérée.

A cet effet l'invention a pour objet un procédé de pistage pour systèmes radars passifs multicanaux selon la revendication 1. Le procédé selon l'invention permet avantageusement de résoudre le problème du pistage multi-cibles pour les radars passifs multi-canaux, travaillant simultanément avec plusieurs émetteurs d'opportunités. Il permet avantageusement d'effectuer la fusion des informations de détection relatives à un même objet et élaborées à partir des signaux émanant de différents émetteurs d'opportunités, la fusion permettant de produire une représentation claire de la situation aérienne autour du radar.

Les caractéristiques et avantages de l'invention seront mieux appréciés grâce à la description qui suit, description qui s'appuie sur les figures annexées, figures qui représentent:

- la figure 1, une illustration schématique d'une base radar bistatique;
- la figure 2, un synoptique général du procédé selon l'invention;
- la figure 3, un synoptique général de l'étape de création de plots fusionnés à partir de plots élémentaires;

- la figure 4, un synoptique de l'étape de constitution de pistes élémentaires;
- la figure 5, un synoptique du séquencement de l'étape de constitution de pistes élémentaires ;
- la figure 6, un synoptique général de l'étape de fusion aval du procédé selon l'invention;
- la figure 7, un synoptique du séquencement de l'étape de fusion aval.

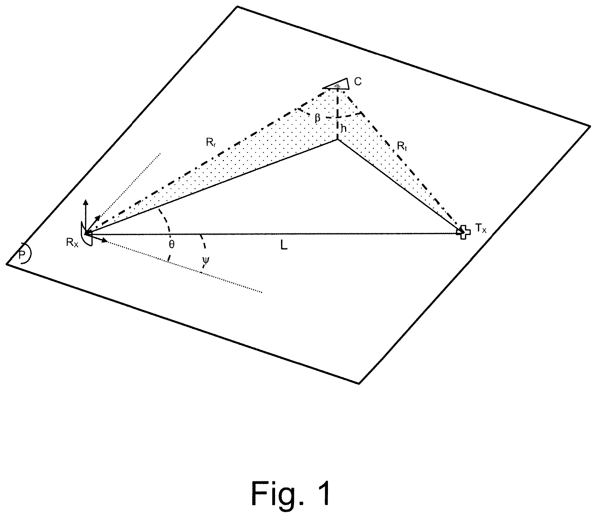

**[0012]** Dans le but faciliter la lecture de la description de l'invention, on rappelle dans un premier temps, certaines des notions relatives aux radars bistatiques et la nature des mesures réalisées par cette famille de radar. La figure 1 présente la géométrie d'un tel dispositif.

**[0013]** Le traitement appliqué au signal, mis en oeuvre par un radar bistatique, permet de mesurer simultanément, au moyen d'une analyse distance/Doppler, le retard et le décalage fréquentiel entre le signal émit par l'émetteur et le signal réfléchi par l'objet détecté C, ou cible. Le retard est homogène à la distance bistatique définie par la relation $r_b \doteq R_T + R_R$ et le décalage fréquentiel est homogène à la vitesse bistatique définie par la relation $v_b \doteq \dot{R}_T + \dot{R}_R$. Ce traitement permet également de restituer une estimée de l'angle $\theta$ d'arrivée du signal réfléchi par la cible C.

**[0014]** Chacune de ces trois mesures ($r_b$, $v_b$ et $\theta$), qui forment les composantes d'un vecteur de mesure $y = [r_b\ v_b\ \theta]'$, étant par principe potentiellement entachées d'une erreur, une précision $\sigma$ est attachée à chacune d'elles. Les informations produites par le traitement du signal sont donc:

- la distance bistatique : $(r_b, \sigma_{r_b})$,
- la vitesse bistatique : $(v_b, \sigma_{v_b})$,
- l'azimut : $(\theta, \sigma_\theta)$.

**[0015]** La distance bistatique $r_b$, correspond par définition à la somme du trajet émetteur-cible $R_T$ et du trajet cible-récepteur $R_R$. Elle est rattachée à la position $X^{t'}$ de la cible par la relation suivante:

$$r_b = R_T + R_R = \left\| X^t - X^{T_x} \right\|_2 + \left\| X^t - X^{R_x} \right\|_2 \quad [1]$$

où:

- $X^{Tx} = [x^{Tx}\ y^{Tx}\ z^{Tx}]'$ est le vecteur position de l'émetteur,
- $X^{Rx} = [x^{Rx}\ y^{Rx}\ z^{Rx}]'$ est le vecteur position du récepteur, et
- $X^t = [x^t\ y^t\ z^t]'$ est le vecteur position de l'objet détecté (ou cible) à l'instant t.

**[0016]** (On rappelle que la grandeur M' désigne la transposée de la grandeur M)

**[0017]** Le repère de référence utilisé pour la mesure des composantes des différents vecteurs est ici, comme représenté sur la figure 1, le repère cartésien ($R_x$, x, y, z), centré sur le récepteur et dans lequel l'axe z représente l'altitude.

**[0018]** La vitesse bistatique $v_b$ correspond de manière connue à la dérivée de la distance bistatique $r_b$. Elle est définie par la relation suivante:

$$v_b = \dot{R}_T + \dot{R}_R = \frac{\left(X^t - X^{T_x}\right).v^t}{\left\| X^t - X^{T_x} \right\|_2} + \frac{\left(X^t - X^{R_x}\right).v^t}{\left\| X^t - X^{R_x} \right\|_2} \quad [2]$$

où $v^t = [v_{xt}\ v_{yt}\ v_{zt}]'$ est le vecteur vitesse de l'objet détecté (i.e. la cible), à l'instant t, dans le repère de référence.

**[0019]** L'azimut de l'objet détecté s'écrit quant à lui:

$$\theta = \text{atan}\left(\frac{y^t - y^{R_x}}{x^t - x^{R_x}}\right) \quad [3]$$

**[0020]** Chaque composante mesurée est, par principe, entachée d'une erreur qui peut être modélisée par un bruit additif gaussien centré de matrice de covariance R. Les erreurs sur chacune des composantes sont ici considérées

comme indépendantes les unes des autres, de sorte que la matrice de covariance du bruit de mesure est une matrice diagonale, construite à partir des précisions de mesure fournies par le traitement du signal et définie comme suit:

$$R = \begin{pmatrix} \sigma_{r_b}^2 & 0 & 0 \\ 0 & \sigma_{v_b}^2 & 0 \\ 0 & 0 & \sigma_\theta^2 \end{pmatrix} \qquad [4]$$

Dans la mesure où l'on dispose pour couvrir l'espace observé de plusieurs émetteurs d'opportunité, il est en outre possible de constituer plusieurs bases bistatiques avec un même radar passif. Dans ce cas, une même cible évoluant dans l'espace couvert, peut être caractérisée par plusieurs mesures de distance bistatique $(r_b^1, r_b^2, \ldots, r_b^n)$ et de vitesse bistatique $(v_b^1, v_b^2, \ldots, v_b^n)$; chaque mesure étant référencée dans une des bases bistatiques formées et les mesures sur les différents canaux de réception étant réalisées simultanément.

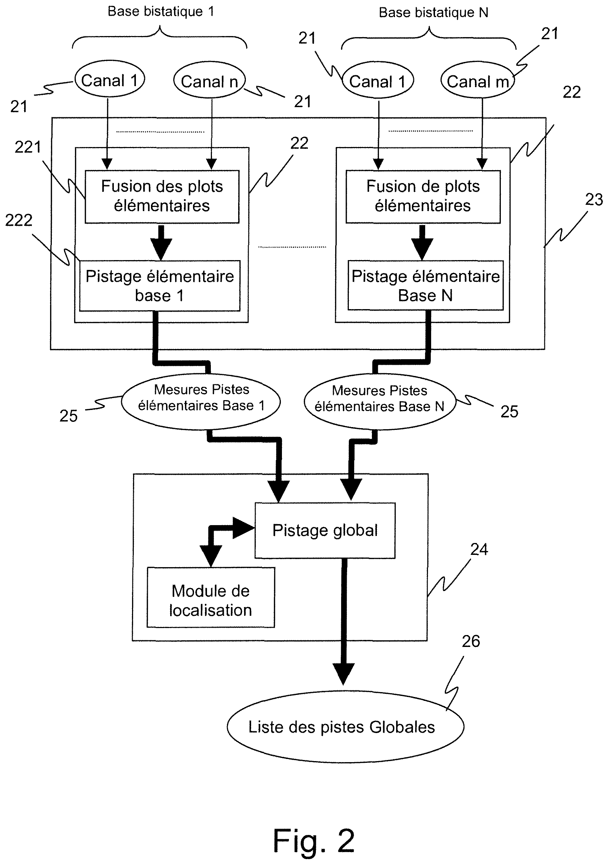

La figure 2 présente un synoptique général du procédé selon l'invention tel qu'il peut être mis en oeuvre par un radar passif multistatique exploitant les émissions de plusieurs émetteurs d'opportunité. Le radar forme ici avec chaque émetteur une base bistatique propre. Comme l'illustre cette figure, le procédé selon l'invention comporte deux étapes principales:

- une première étape 23 de fusion amont pour former, pour chaque base bistatique, un ensemble de pistes élémentaire; chaque piste élémentaire résultant de l'application d'une opération 22 de fusion des plots élémentaires élaborés sur les différents canaux de réception 21 d'une même base bistatique et relatifs au même objet détecté;
- une seconde étape 24 de fusion aval pour former des pistes globales 26, chaque piste globale étant construite par fusion des pistes élémentaires 25 fournies par les différentes bases bistatiques et relatives à la même cible.

De la sorte, le procédé selon l'invention traite les plots élaborés en deux temps, un premier temps durant lequel chaque base bistatique est considérée séparément, les plots élémentaires élaborés à partir des différents canaux de réception 21 étant regroupés pour former des plots fusionnés servant à constituer des pistes élémentaires, et un deuxième temps durant lequel les pistes élémentaires élaborées par différentes bases bistatiques sont associées pour former des pistes globales, chaque piste globale correspondant à un objet détecté différent.

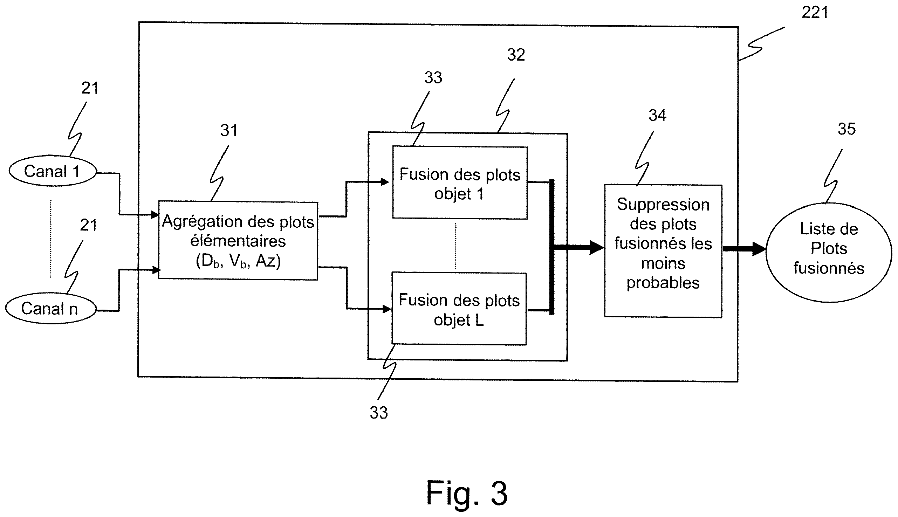

On considère ensuite les figures 3, 4 et 5 qui illustrent le principe de fonctionnement de l'étape principale 23, du procédé selon l'invention, étape dite "de fusion amont". L'objet de cette étape est de fusionner les mesures provenant de plusieurs canaux fréquentiels distincts et issus d'un même émetteur (ou à défaut d'émetteurs co-localisés). Cette étape de fusion, réalisée sur l'ensemble des trois composantes du vecteur d'observation $(r_b, v_b, \theta)$ caractérisant la cible, est possible du fait que les mesures constituant les plots extraits des signaux provenant de ces canaux sont issus de la même base bistatique et sont donc construits à partir de l'observation, à un instant donné d'une même situation aérienne. Elle permet avantageusement d'améliorer la précision de l'observation d'une cible ayant répondu simultanément sur plusieurs canaux d'une même base bistatique.

Comme l'illustre la figure 2, l'étape 23 de fusion amont traite chaque base bistatique séparément des autres pour former des pistes élémentaires à partir des plots élémentaires élaborés par les différents canaux de réception que comporte la base bistatique considérée. A cet effet elle met d'abord en oeuvre, pour chaque base bistatique, une opération de pistage élémentaire 22 qui se décompose elle-même en deux opérations successives:

- une première opération 221 de formation de plots fusionnés à partir des plots élémentaires élaborés sur chaque canal de réception.
- une deuxième opération 222 de pistage pour former des pistes élémentaires par association au cours du temps des plots fusionnés élaborés au cours du temps et relatifs à une même cible.

L'opération 221 de formation des plots fusionnés est elle-même, comme l'illustre la figure 3 exécutée en trois étapes:

- un premier module 31 d'agrégation, consistant à grouper les plots élémentaires formés sur les différents canaux 21 pour réaliser des agrégats, un agrégat étant constitué de plots présentant des caractéristiques proches et vraisemblablement relatif une même cible.

- un deuxième module 32 de fusion des mesures constituant les plots élémentaires agrégés, de façon à constituer des plots fusionnés.
- un troisième module de suppression des plots fusionnés élaborés et dont la réalité est peu probable.

L'algorithme d'agrégation selon l'invention, mis en oeuvre par le module 31, recherche, parmi tous les plots élémentaires élaborés à partir des signaux des différents canaux de réception d'une même base bistatique, ceux qui sont associables au sens du critère de proximité suivant:

"Deux plots (p1, p2) sont considérés comme devant être associés si les trois équations suivantes sont vérifiées simultanément:

$$
\left\{
\begin{array}{l}
\left[ r_b^{p1} - 2\sigma_{r_b^{p1}} ; r_b^{p1} + 2\sigma_{r_b^{p1}} \right] \cap \left[ r_b^{p2} - 2\sigma_{r_b^{p2}} ; r_b^{p2} + 2\sigma_{r_b^{p2}} \right] \neq \varnothing \\[2ex]
\left[ v_b^{p1} - 2\sigma_{v_b^{p1}} ; v_b^{p1} + 2\sigma_{v_b^{p1}} \right] \cap \left[ v_b^{p2} - 2\sigma_{v_b^{p2}} ; v_b^{p2} + 2\sigma_{v_b^{p2}} \right] \neq \varnothing \\[2ex]
\left[ \theta^{p1} - 2\sigma_{\theta^{p1}} ; \theta^{p1} + 2\sigma_{\theta^{p1}} \right] \cap \left[ \theta^{p2} - 2\sigma_{\theta^{p2}} ; \theta^{p2} + 2\sigma_{\theta^{p2}} \right] \neq \varnothing
\end{array}
\right.
\qquad [5]
$$

"

Il est à noter que la validité de ce critère d'association repose uniquement sur la précision de chaque composante du vecteur de mesure associé au plot considéré. En supposant en outre le bruit de mesure indépendant et gaussien centré, l'association de plots élémentaires basée sur ce critère revient, de manière connue, à ouvrir des fenêtres d'association correspondant à un intervalle de confiance de 95%.

La technique de fusion mise en oeuvre par le module 32 consiste, quant à elle, à associer une pseudo-mesure à chaque plot fusionné obtenu. Cette pseudo-mesure est déterminée à partir des mesures $(y_j, R_j)$ correspondant aux K plots élémentaires agrégés, en calculant (opération 33) la somme pondérée suivante:

$$
y = R \sum_{j=1}^{K} R_j^{-1} y_j
\qquad [6]
$$

Dans laquelle R est la matrice définie par:

$$
R = \left( \sum_{j=1}^{K} R_j^{-1} \right)^{-1}
\qquad [7]
$$

L'utilisation de cette règle de fusion permet avantageusement de tenir compte des précisions relatives des mesures associées. Ainsi plus une mesure est imprécise et moins elle contribue à l'élaboration de la mesure fusionnée.

Le module 32 fournit donc, pour chaque cible détectée et pour chaque base bistatique, une mesure synthétique issue des mesures constituant les plots élémentaires élaborés à partir de signaux reçus sur les différents canaux 21. A ce stade la notion de canal de réception disparaît au profit de la notion de base bistatique. Chaque base bistatique, c'est à dire chaque base constituée par le récepteur radar $R_x$ et un émetteur d'opportunité $T_{xi}$ donné, fournit pour chaque instant de mesures un jeu de plots fusionnés correspondant chacun à une cible potentielle.

Cependant, pour limiter le nombre de plots et ne retenir que les plots pertinents le procédé selon l'invention comporte avantageusement un module complémentaire 34 qui attribue un score à chacun des plots fusionnés produits par le module 32. Selon l'invention, le score attribué à un plot fusionné est égal au nombre de canaux de réception pour lesquels la cible correspondante a été détectée. Par suite, la règle d'acceptation ou de rejet des plots est définie comme suit:

- Pour un nombre de canaux égal à 2, tous les plots, y compris les plots élémentaires n'ayant pu être fusionnés avec d'autres plots sont conservés.
- Pour un nombre de canaux n supérieur à 2, seuls les plots fusionnés ayant atteint un score de n-p sont conservés. Le terme p est ici un paramètre réglable pour tenir compte de la puissance de l'émetteur considéré, ainsi que du taux de fausse alarme souhaité.

Ainsi le module 34 produit, pour chaque instant de mesures discrétisé k une liste de plots fusionnés 35 qui va permettre l'élaboration de pistes élémentaires

L'opération 222 de pistage présentée sur la figure 2, a pour objet de rechercher la présence de cibles dans les données issues d'une même base bistatique,. Pour ce faire on réalise l'association au cours du temps des plots fusionnés 35 pouvant représenter une même cible. Cette opération 222 permet avantageusement:

- d'éliminer la fausse alarme résiduelle (et, de ce fait, de ne transmettre à l'étage de fusion aval que les informations pertinentes);
- de compenser, par prédiction, un manque momentané de plot fusionné pour entretenir une piste;
- de lisser les mesures au travers d'un modèle de dynamique et d'éviter ainsi les données aberrantes.

On rappelle ici, qu'un plot peut être considéré comme l'ensemble des valeurs à l'instant k considéré, des paramètres de mesure relatifs à une cible détectée. Par suite l'état à l'instant k de la piste élémentaire associée à matérialisant l'évolution de la cible considérée, est défini par la valeur du vecteur d'état associé à cette piste, vecteur dont les composantes sont la distance, la vitesse et l'accélération bistatiques ainsi que l'azimut et sa dérivée. Cette piste est entretenue après exploitation de l'information issue du plot fusionné qui lui est associé à cet instant.

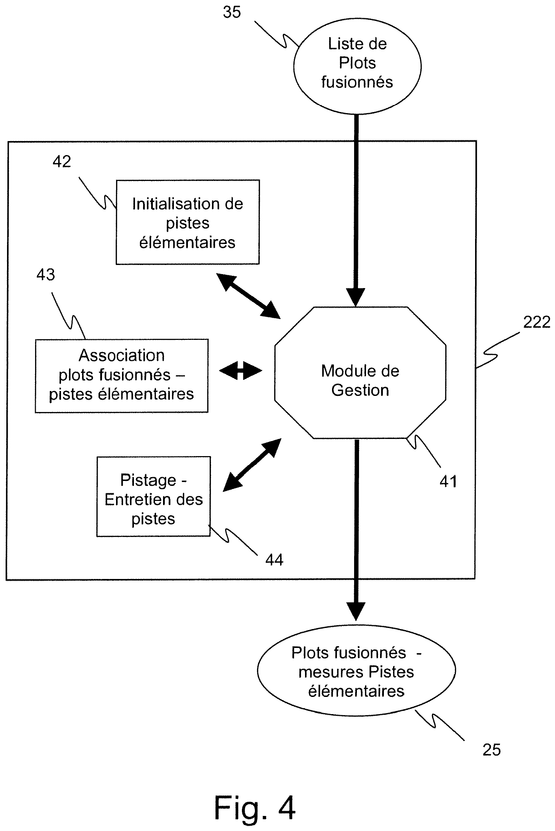

Comme l'illustre la figure 4, cette opération est réalisée par mise en oeuvre de manière itérative, pour chaque instant de mesure k, des modules de traitement suivants:

- un module de gestion 41 chargé du séquencement d'ensemble et orchestrant les autres modules de traitement.
- un module 42 d'initialisation de pistes élémentaires;
- un module 43 d'association de données, chargé d'identifier les associations les plus vraisemblables entre les plots fusionnés constitués et les pistes élémentaires en cours;
- un module 44 de pistage proprement dit, réalisant les fonctions de filtrage et de prédiction permettant en particulier de prédire la valeur prise par une piste élémentaire donnée à l'instant de mesures à venir.

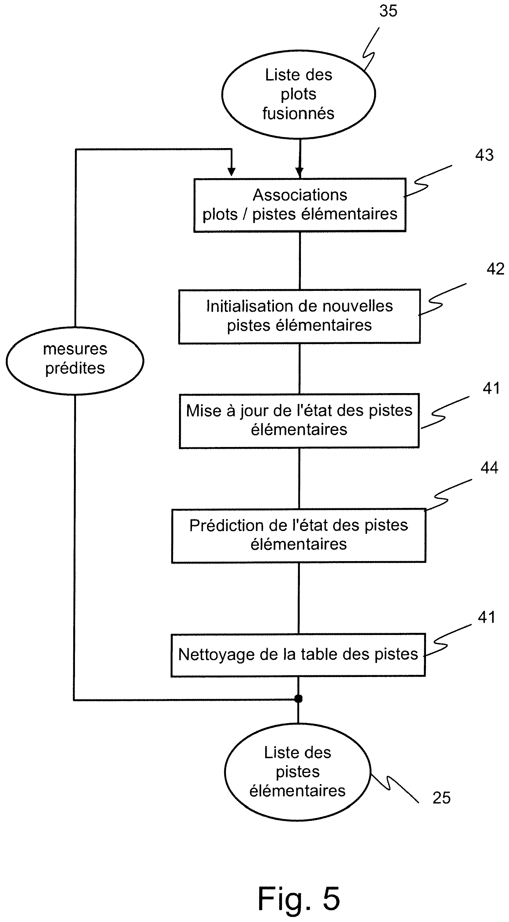

Le séquencement réalisé par le module de gestion 41 est illustré par la figure 5. Il consiste, à enchaîner les tâches réalisées par les autres modules au rythme d'apparition des plots fusionnés, les plots fusionnés élaborés à un instant k donné servant à initialiser des pistes élémentaires nouvelles ou à entretenir (prolonger) des pistes élémentaires déjà existantes.

Selon l'invention, le module de gestion 41 est également chargé de l'élaboration et de la mise à jour de l'état des pistes élémentaires formées. A ce titre il procède à l'attribution d'un score (niveau de vraisemblance) aux pistes élémentaires et à l'élimination des pistes les moins probables. A cet effet, il met en oeuvre les règles suivantes:

- un score de départ est attribué à chaque piste. Ce score est proportionnel au nombre de canaux fréquentiels à partir desquels a été élaborés le plot fusionné ayant servi à l'initialisation de la piste considérée.
- le score initial attribué, évolue avec le nombre de canaux à partir desquels est élaborés le plot fusionné obtenu à l'instant k en cours et diminue dès lors que l'entretien de la piste s'effectue en mode prédiction, le mode prédiction étant mis en oeuvre dès l'instant où aucun plot fusionné ne peut être utilisé pour entretenir la piste considérée. Au-delà d'un nombre défini de cycles de fonctionnement en mode prédiction, la piste élémentaire prédite est fermée et son numéro d'identification est libéré de façon à pouvoir être réattribué à une piste élémentaire nouvelle.

Selon un mode de mise en oeuvre particulier, le score peut être affecté d'un facteur pénalisant, en particulier, par exemple, si des difficultés sont apparues lors de la phase d'association (difficultés à prendre une décision d'association). Ce dernier mécanisme permet avantageusement d'avoir une image de la confiance à accorder à la réalité de la piste correspondante.

Selon l'invention également, le module 43 d'association de données a pour rôle de rechercher les correspondances entre les nouvelles observations (i.e. les nouveaux plots fusionnés) obtenues à un instant k, et les pistes élémentaires en cours. Ces pistes en cours ont été établies à partir des plots fusionnés élaborés aux instants de mesure précédents. La méthode d'association retenue est dérivée de la méthode connue sous le nom de "Méthode des plus proches voisins". Son principe repose sur l'utilisation d'un critère d'association permettant de restreindre l'arbre des hypothèses d'association à l'hypothèse la plus probable.

Le critère d'association repose sur une mesure de distance statistique entre les observations prédites pour un instant k (plots fusionnés prédits) par le module de pistage 44 pour les pistes élémentaires en cours d'entretien et les observations, c'est-à-dire les plots fusionnés effectivement disponibles à l'instant k.

Autrement dit, si l'on considère la situation à un instant k où l'on a $n_t$ pistes entretenues et $n_y$ observations ($n_y$ plots fusionnés) disponibles, et si l'on considère $\left( y_k^j, R_k^j \right)$ la $j^{ième}$ observation (le $j^{ième}$ plot fusionné) et sa covariance, ainsi que $\left( \tilde{x}_k^t, \tilde{\Sigma}_{x_k^t} \right)$ l'estimée de l'état de la $t^{ième}$ piste et sa covariance, le principe d'association suivi consiste à calculer pour toutes les combinaisons (t,j) une distance $d_k^{t,j}$, homogène à la vraisemblance de la mesure prédite t, connaissant l'observation j $\left( E\left[ y_k^j \middle| x_k^t \right] \right)$. Cette distance statistique s'obtient en calculant l'innovation de la piste t, sous une hypothèse de vecteur de mesure $y_k^j$ elle a pour expression:

$$d_k^{t,j} = \left( i_k^{t,j} \right)' \Sigma_{i_k^{t,j}}^{-1} i_k^{t,j} \qquad [8]$$

Dans laquelle l'Innovation $i_k^{t,j}$ a pour expression:

$$i_k^{t,j} = y_k^j - H\tilde{x}_k^t \qquad [9]$$

et la Covariance de l'innovation $\Sigma_{i_k^{t,j}}$ a pour expression:

$$\Sigma_{i_k^{t,j}} = H\tilde{\Sigma}_{x_k^t}H' + R_k^j \qquad [10]$$

La matrice H, qui représente la matrice de passage du vecteur d'état de la piste au vecteur des mesures, est la matrice définie par l'égalité suivante:

$$H = \begin{pmatrix} 1 & 0 & 0 & 0 & 0 \\ 0 & 1 & 0 & 0 & 0 \\ 0 & 0 & 0 & 1 & 0 \end{pmatrix} \qquad [11]$$

De la sorte, une observation j est considérée, selon l'invention, comme associable à une piste t dès lors que $d_k^{t,j}$ est inférieure à un seuil $\gamma$ défini par une probabilité de bonne association et une loi du $\chi^2$ à 3 degrés de liberté. Le calcul sur l'ensemble des combinaisons (t,j) permet par ailleurs de construire une matrice d'association

$$\Omega_k = \left\{ d_k^{t,j}, t \in \left[1, n_t\right] j \in \left[1, n_y\right] \right\}.$$

Par suite, l'approche des plus proches voisins consiste à ne retenir pour une piste t que l'association à l'observation $\hat{j}_t$ vérifiant l'égalité suivante :

$$\hat{j}_t = \underset{j \in \left[1, n_y\right]}{\arg\min} \left( d_k^{t,j} \le \gamma \right) \qquad [12]$$

Selon l'invention encore, le module 42 d'initialisation des pistes élémentaires procède à partir de deux plots fusionnés successifs, $p_{k-1}$ et $p_k$, attribuables à une même cible et non encore associés à une piste entretenue. Contrairement au paragraphe précédent, dans la phase d'initialisation on ne dispose pas de prédiction de mesure, la piste à former n'existant pas encore. Par suite, pour décider si deux plots $(p_k, p_{k-1})$ proviennent de la même cible et peuvent donc constituer une piste élémentaire indépendante, le procédé selon l'invention met en oeuvre une démarche heuristique en trois étapes qui sont décrites de la façon suivante :

-   Première étape : on applique aux plots formés à l'instant k-1 (instant discrétisé) et non associés à des pistes élémentaires une fonction de propagation définissant ces plots à l'instant k comme suit (la propagation se fait sur la valeur nominale et l'incertitude des composantes) :

$$\begin{cases} \tilde{r}_b^{p_k} = r_b^{p_{k-1}} + v_b^{p_{k-1}} (t_k - t_{k-1}) \\ \tilde{v}_b^{p_k} = v_b^{p_{k-1}} \\ \tilde{\theta}^{p_k} = \tilde{\theta}^{p_{k-1}} \end{cases} \qquad [13]$$

et

$$\begin{cases} \sigma_{\tilde{r}_b^{p_k}} = \sqrt{\sigma_{r_b^{p_{k-1}}}^2 + (t_k - t_{k-1})^2.\sigma_{r_b^{p_{k-1}}}^2 + (t_k - t_{k-1})^5.\sigma_\gamma^2/20} \\ \sigma_{\tilde{v}_b^{p_k}} = \sqrt{\sigma_{v_b^{p_{k-1}}}^2 + (t_k - t_{k-1})^3.\sigma_\gamma^2/3} \\ \sigma_{\tilde{\theta}^{p_k}} = \sqrt{\sigma_{\theta^{p_{k-1}}}^2 + (t_k - t_{k-1})^3.\sigma_\omega^2/3} \end{cases} \qquad [14]$$

Où $\sigma_\gamma$ et $\sigma_\omega$ sont des constantes associées au bruit de modèle de la cible.

-   Seconde étape : Identification des plots compatibles.
    Selon l'invention, deux plots sont déclarés compatibles si les trois inégalités suivantes sont vérifiées :

$$\begin{cases} \left| r_b^{p_k} - \tilde{r}_b^{p_k} \right| \le 3.\left( \sigma_{r_b^{p_k}} + \sigma_{\tilde{r}_b^{p_k}} \right) \\ \left| v_b^{p_k} - \tilde{v}_b^{p_k} \right| \le \Delta_{v_b} \\ \left| \theta^{p_k} - \tilde{\theta}^{p_k} \right| \le 3.\left( \sigma_{\theta^{p_k}} + \sigma_{\tilde{\theta}^{p_k}} \right) \end{cases} \quad [15]$$

On note ici que comme la composante vitesse $v_b$ peut être déterminée par le radar avec précision et que comme une cible même en vol rectiligne voit sa vitesse bistatique varier, le procédé selon l'invention, pour pouvoir trouver des plots successifs à associer, utilise une fenêtre de chaînage ($\Delta v_b$) relativement large sur l'axe vitesse. Sans quoi, aucune piste nouvelle ne pourrait être ouverte.

- Troisième étape : Initialisation proprement dite d'une piste.

L'ouverture d'une piste élémentaire nouvelle consiste, pour le module d'initialisation 42, à définir son état initial. Selon l'invention cet état est considéré comme gaussien et donc totalement décrit par ses deux premiers moments. Selon le procédé de l'invention l'initialisation se calcule comme suit :

$$x^{init} = \begin{bmatrix} r_b^{init} \\ v_b^{init} \\ \gamma_b^{init} \\ \theta^{init} \\ \omega^{init} \end{bmatrix} = \begin{bmatrix} r_b^{p_k} \\ v_b^{p_k} \\ \left( v_b^{p_k} - v_b^{p_{k-1}} \right) \big/ (t_k - t_{k-1}) \\ \theta^{p_k} \\ \left( \theta^{p_k} - \theta^{p_{k-1}} \right) \big/ (t_k - t_{k-1}) \end{bmatrix} \quad [16]$$

Et

$$\Sigma_{x^{init}} = \begin{pmatrix} \sigma^2_{r_b^{p_k}} & 0 & 0 & 0 & 0 \\ 0 & \sigma^2_{v_b^{p_k}} & 0 & 0 & 0 \\ 0 & 0 & \sigma^2_{\gamma_b^{init}} & 0 & 0 \\ 0 & 0 & 0 & \sigma^2_{\theta^{p_k}} & 0 \\ 0 & 0 & 0 & 0 & \sigma^2_{\omega^{init}} \end{pmatrix} \quad [17]$$

où $\sigma^2_{\gamma_b^{init}}$ et $\sigma^2_{\omega_b^{init}}$ sont des constantes fixées pour permettre le suivi, sans décrochage du filtre, des cibles les plus rapides à pister.

Il est à noter qu'en procédant ainsi, le module d'initialisation peut procéder à la création de plusieurs pistes élémentaires à partir d'un même plot $p_k$ à l'instant k. L'initialisation peut donc engendrer une surabondance de pistes. Toutefois, les pistes élémentaires non entretenues par des plots fusionnés ultérieurs disparaîtront au fil du temps du fait de la diminution de leur score.

Le module de pistage 44 a, quant à lui, pour rôle d'établir une estimation (au regard de la théorie de l'estimation en temps discret) de l'état x de la cible (variable d'état du système) moyennant un modèle de dynamique et un modèle d'observation. Il est basé, selon l'invention, sur l'utilisation d'un filtre Kalman en temps discret, dont les entrées/sorties sont définies comme suit:

- la variable d'état est ici l'état d'évolution de la cible considérée, état modélisé par un processus aléatoire $\{x_k\}$ à valeur dans $\mathbb{R}^5$, dont les composantes sont: $\lfloor r_{b,k} \, v_{b,k} \, \gamma_{b,k} \, \theta_k \, \omega_k \rfloor$ et où $r_{b,k}$, $v_{b,k}$, $\gamma_{b,k}$, $\theta_k$ et $\omega_k$ représentent respectivement la distance bistatique [m], la vitesse bistatique [m/s], l'accélération bistatique [m/s/s], l'azimut de la cible vue du récepteur [rad] et la vitesse angulaire de l'azimut de la cible [rad/s]

- l'évolution de la dynamique de la cible est représentée de manière connue par le système linéaire à temps discret suivant :

$$x_k = Fx_{k-1} + w_k \qquad\qquad [18]$$

où le processus $\{w_k\}$ est un bruit blanc gaussien centré, de matrice de covariance Q supposée invariante dans le temps.

Si l'on note T le pas d'échantillonnage, c'est à dire le laps de temps séparant deux instants de mesure, F et Q ont en outre respectivement pour expressions connues:

$$F = \begin{pmatrix} 1 & T & T^2/2 & 0 & 0 \\ 0 & 1 & T & 0 & 0 \\ 0 & 0 & 1 & 0 & 0 \\ 0 & 0 & 0 & 1 & T \\ 0 & 0 & 0 & 0 & 1 \end{pmatrix} \qquad\qquad [19]$$

et

$$Q = \sigma_\gamma^2 \begin{pmatrix} T^5/20 & T^4/8 & T^3/6 & 0 & 0 \\ T^4/8 & T^3/3 & T^2/2 & 0 & 0 \\ T^3/6 & T^2/2 & T & 0 & 0 \\ 0 & 0 & 0 & 0 & 0 \\ 0 & 0 & 0 & 0 & 0 \end{pmatrix} + \sigma_\omega^2 \begin{pmatrix} 0 & 0 & 0 & 0 & 0 \\ 0 & 0 & 0 & 0 & 0 \\ 0 & 0 & 0 & 0 & 0 \\ 0 & 0 & 0 & T^3/3 & T^2/2 \\ 0 & 0 & 0 & T^2/2 & T \end{pmatrix} \qquad [20]$$

- pour un plot fusionné $p_k$ donné, les mesures délivrées à l'instant k par la chaîne de traitement (variable d'observation sont, comme il a été dit précédemment, rassemblées dans le vecteur $y_k = [r_{b,k} \, v_{b,k} \, \theta_k]'$ représentant ce plot. Elles sont entachées d'une erreur modélisée par un bruit blanc gaussien centré $\{v_k\}$, de matrice de covariance $R_k$:

$$R_k = \begin{pmatrix} \sigma_{r_{b,k}}^2 & 0 & 0 \\ 0 & \sigma_{r_{b,k}}^2 & 0 \\ 0 & 0 & \sigma_{\theta_k}^2 \end{pmatrix} \qquad\qquad [21].$$

Par suite, l'équation d'observation, modélisant le senseur, s'écrit

$$y_k = Hx_k + v_k \qquad [22]$$

$$H = \begin{pmatrix} 1 & 0 & 0 & 0 & 0 \\ 0 & 1 & 0 & 0 & 0 \\ 0 & 0 & 0 & 1 & 0 \end{pmatrix}.$$

avec

A chaque instant k, l'état estimé de la cible sera donc caractérisé par les deux premiers moments du processus $\{x_k\}$, sa moyenne conditionnelle $\hat{x}_k$ et sa covariance conditionnelle $\hat{\Sigma}_{x_k}$, définies par:

$$\hat{x}_k = E\left[ x_k \middle| Y^k \right] \qquad [23]$$

et

$$\hat{\Sigma}_{x_k} = E\left[ \left(x_k - \hat{x}_k\right)\left(x_k - \hat{x}_k\right)' \middle| Y^k \right] \qquad [24]$$

avec $Y^k = \{y_j\}_{j=1,\ldots,k}$.

On notera que E représente ici l'espérance mathématique.

Du fait de la linéarité des modèles, du caractère gaussien des bruits additifs et sous une hypothèse de conditions initiales gaussiennes pour l'état, le filtre optimal pour l'estimation de l'état d'une cible correspond donc au filtre de Kalman définit comme suit:

- Etat prédit:

$$\tilde{x}_k = E\left[ x_k \middle| Y^{k-1} \right] = F\hat{x}_{k-1} \qquad [25]$$

- Covariance prédite:

$$\tilde{\Sigma}_{x_k} = E\left[ \left(x_k - \tilde{x}_k\right)\left(x_k - \tilde{x}_k\right)' \middle| Y^{k-1} \right] \qquad [26]$$
$$= F\hat{\Sigma}_{x_{k-1}}F' + Q$$

- Innovation:

$$i_k = y_k - H\tilde{x}_k \qquad [27]$$

- Covariance de l'innovation:

$$\Sigma_{i_k} = H\tilde{\Sigma}_{x_k}H' + R_k \qquad [28]$$

- Gain de Kalman:

$$K_k = \Sigma_{x_k} H \Sigma_{i_k}^{-1} \qquad\qquad [29]$$

- Etat estimé:

$$\hat{x}_k = \tilde{x}_k + K_k i_k \qquad\qquad [30]$$

- Covariance de l'état estimée:

$$\hat{\Sigma}_{x_k} = (I - K_k H)\tilde{\Sigma}_{x_k} \qquad\qquad [31]$$

La mise en oeuvre d'un tel filtre permet ainsi de déterminer à partir de l'état estimé d'une piste élémentaire à l'instant k-1, l'état prédit de cette piste pour l'instant k, la mesure prédite pour la cible correspondante. Cette mesure sera fournie au module 43 qui réalisera au temps k l'association des plots fusionnés avec pistes élémentaires existantes. Cette mesure prédite permet de déterminer, si un plot fusionné disponible à l'instant k peut être associé à une piste élémentaire existante. Si tel est le cas ce plot sera exploité pour estimer l'état de la piste élémentaire considérée à l'instant k.

Dans l'hypothèse où aucune observation, c'est à dire aucun plot fusionné ne peut être associé à une piste élémentaire donnée, cette dernière est alors prise en charge dans un mode de prédiction pure, pour lequel l'état d'une piste à l'instant k n'est plus déterminé que par l'équation d'évolution de la dynamique :

- Etat prédit:

$$\tilde{x}_k = F\hat{x}_{k-1}$$

- Covariance prédite:

$$\tilde{\Sigma}_{x_k} = F\hat{\Sigma}_{x_{k-1}}F' + Q$$

Ce type de prise en charge cesse sitôt qu'une nouvelle association est possible à un instant k donné ou encore cesse par abandon de la piste par le système (score trop faible). Le module de gestion 41 met par ailleurs en oeuvre une opération de nettoyage consistant à supprimer les pistes non entretenues ou aberrantes.

L'étape 222 de formation de pistes élémentaires permet donc d'associer au cours du temps des plots fusionnés produits par les différents canaux relatifs à une même base bistatique. Elle conduit à l'élaboration et à l'entretien d'une table de pistes élémentaires, table qui contient notamment pour chaque piste son numéro, la valeur à l'instant donné du vecteur d'état de la piste, ainsi que le score qui lui est attribué et qui traduit la vraisemblance de la piste. Selon l'invention, cette table est remise à jour à chaque itération, c'est à dire pour chaque nouvel instant k de mesure. Les données mises à jour sont exploitées par l'étape suivante 24 pour initialiser et entretenir des pistes globales.

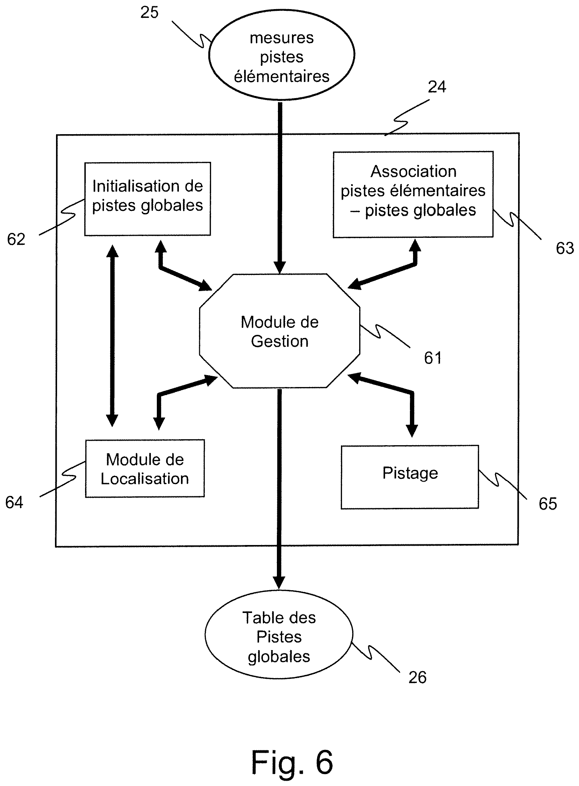

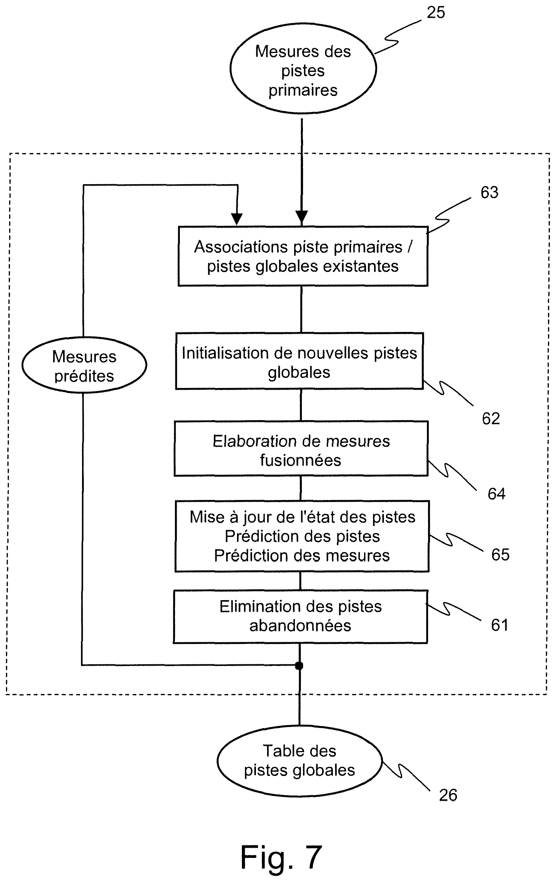

Les figures 6 et 7 illustrent le principe de fonctionnement de l'étape 24 de fusion aval constituant la seconde étape du procédé selon l'invention. L'étape 24 de fusion aval est chargée de la fusion de l'ensemble des pistes élémentaires élaborées lors de l'étape 23 de fusion amont, pistes élémentaires attachées à chacune des bases bistatiques. Le but est de produire des informations pertinentes quant à la situation aérienne entourant le radar. Au cours de cette étape, qui constitue le coeur du traitement des données, on réalise les actions suivantes:

- associer les pistes élémentaires produites par les différentes bases bistatiques pour rechercher et sélectionner, parmi toutes les associations inter-bases de pistes élémentaires possibles, les associations de pistes élémentaires les plus vraisemblables. Les associations les plus vraisemblables sont celles qui conduisent à la formation d'une piste globale correspondant réellement à une cible.
- fusionner les mesures relatives aux pistes élémentaires associées pour construire des pseudo-mesures relatives aux pistes globales entretenues.
- Tenir à jour l'état des pistes globales formées et le faire vivre au rythme des apparitions/disparitions des pistes élémentaires contributrices. Le synoptique de la figure 6 présente l'organisation des différents modules de traitement mis en oeuvre par l'étape de fusion aval.

L'architecture du traitement de fusion aval est dérivée des architectures connues des pisteurs multi-cibles/multi-senseurs. On y distingue principalement les modules suivants:

- un module 62 d'initialisation de pistes globales, chargé de procéder à la création de pistes globales en passant en revue toutes les associations possibles de pistes élémentaires, et d'identifier les associations les plus vraisemblables.
- un module 63 d'association pistes élémentaires-pistes globales, chargé d'associer des plots constitutifs des pistes élémentaires, aux pistes globales et, le cas échéant, de raccrocher de nouvelles pistes élémentaires à une piste globale existante.
- un module 64 de localisation, chargé d'estimer, à partir des mesures de distance bistatique relatives aux pistes élémentaires associées à la piste globale considérée, la position de la cible dans le repère cartésien de référence.
- Un module 65 de pistage, chargé d'estimer la position et la vitesse (i.e. l'état) de la cible au regard d'un vecteur d'observations et d'un modèle de dynamique de cible.
- un module de gestion 61, chargé du séquencement de la mise en oeuvre des différents modules et procédant, à chaque itération, au nettoyage des pistes globales mortes et/ou aberrantes.

Le séquencement d'ensemble de la phase de fusion aval, illustré par la figure 7, est réalisé par le module de gestion 61. Il consiste essentiellement, de manière classique, à enchaîner de manière itérative les tâches réalisées par les modules 62, 63 et 64 au rythme des instants k d'élaboration des plots fusionnés constituant les pistes élémentaires.

Selon l'invention, le module de gestion 61 est également chargé de l'élaboration et de l'entretien de la table des pistes globales. A ce titre il attribue un numéro à chaque piste fusionnée globale formée. Ce numéro est attribué à la piste considérée pour toute sa durée d'existence. Il procède également à l'attribution d'un score (niveau de vraisemblance) à chacune des pistes globales entretenues. Selon l'invention, le score attribué à une piste globale correspond par exemple à la somme des scores des pistes élémentaires contribuant à son entretien. Par suite, la disparition de l'ensemble des pistes élémentaires alimentant une piste globale conduit à une annulation du score de la piste globale considérée et à la mise en oeuvre d'une procédure de prédiction pure de l'état de cette piste. Au-delà d'un certain nombre d'itérations sans amélioration du score, la piste globale est abandonnée et le module de gestion l'élimine de la table des pistes globales. Son numéro est alors disponible pour être attribué à une piste formée ultérieurement.

Le module 62 d'initialisation exploite les pistes de la liste des pistes élémentaires n'ayant pas encore fait l'objet d'une association avec une piste globale, ou encore celles qui, ayant été exclues d'une association antérieure, n'ont pu être associées à aucune autre piste globale existante. Comme cela a été dit précédemment, toute piste globale est initialisée par association de deux pistes élémentaires élaborées à partir de deux bases bistatiques distinctes.

Selon l'invention, l'initialisation d'une piste globale se décompose en cinq étapes réalisées dans l'ordre suivant:

- première étape : test de la cohérence en azimut des pistes élémentaires candidates à une association;
- deuxième étape : test cohérence en distance des pistes élémentaires candidates;
- troisième étape : test de cohérence en vitesse des pistes élémentaires candidates;
- quatrième étape : initialisation d'une piste globale;
- cinquième étape : extension du nombre de pistes élémentaires contributrices (i.e. du nombre de base bistatique) de la piste globale nouvellement créée.

Les tests des trois premières étapes sont réalisés sur les plots représentant l'état des pistes élémentaires considérés à un instant k donné. Ces trois étapes sont réalisées séquentiellement, le passage d'une étape à la suivante est conditionné par la réussite du test associé à l'étape en cours. Elles constituent ensemble le test de vraisemblance de l'association, test dont le résultat conditionne l'exécution de la quatrième et de la cinquième étape.

Selon l'invention, la première étape exploite la cohérence en azimut des pistes élémentaires candidates. Elle met en oeuvre un premier test (test n°1) qui consiste à calculer l'écart d'azimut ($|\theta_{P_{Txi}} - \theta_{P_{Txj}}|$) entre les plots extrémités, à l'instant k, des deux pistes élémentaires candidates $P_{Txi}$ et $P_{Txj}$. Si cet écart est supérieur à une valeur fixée, la procédure d'initialisation s'arrête sinon l'étape suivante est réalisée. Ce premier test permet d'éliminer instantanément les tentatives d'association non consistantes (associations non vraisemblables).

Selon l'invention, la deuxième étape analyse la cohérence en distances des pistes candidates à une association. Elle met en oeuvre un second test (test n° 2) pour déterminer la vraisemblance de l'association envisagée. Cette seconde étape qui effectue la localisation de ces deux plots à partir des azimuts et des distances bistatiques, est divisée en deux parties :

- La première partie consiste à vérifier rapidement si les deux ellipsoïdes associées aux deux pistes élémentaires se croisent dans le secteur angulaire correspondant à leur azimut moyen et si oui, quelle est la position (x,y,z) de ce croisement.

Cette vérification consiste, sous une hypothèse d'émetteur et de récepteur coplanaire, à trouver, si elle existe, la solution du système :

$$\frac{R_b^{P_{Txi}\,2} - L_i^2}{2\left(R_b^{P_{Txi}} - L_i \cos\left(\tilde{\theta} - \theta_i\right)\cos(\phi)\right)} - \frac{R_b^{P_{Txj}\,2} - L_j^2}{2\left(R_b^{P_{Txj}} - L_j \cos\left(\tilde{\theta} - \theta_j\right)\cos(\phi)\right)} = 0 \qquad [32]$$

où $\left(R_b^{P_{Txi}}, R_b^{P_{Txj}}\right)$ représentent les distances bistatiques des plots extrémités des pistes élémentaires candidates $P_{Txi}$ et $P_{Txj}$. $\tilde{\theta}$ l'azimut moyen de ces plots, $(L_i, L_j)$ les distances émetteurs-récepteurs des bases bistatiques desquelles sont issues les pistes élémentaires candidates et $(\theta_i, \theta_j)$ les azimuts sous lesquels les émetteurs de ces mêmes bases bistatiques sont vus par les récepteurs.

La solution de ce système s'écrit:

$$\cos(\phi) = \frac{2.\left(R_b^{P_{Txi}\,2} - L_i^2\right).R_b^{P_{Txj}} - 2.\left(R_b^{P_{Txj}\,2} - L_j^2\right).R_b^{P_{Txi}}}{2\left(R_b^{P_{Txi}\,2} - L_i^2\right).L_j.\cos\left(\tilde{\theta} - \theta_j\right) - 2.\left(R_b^{P_{Txj}\,2} - L_j^2\right).L_i \cos\left(\tilde{\theta} - \theta_i\right)} \qquad [33]$$

Par suite, une première estimation de la localisation de la cible est donnée par :

$$\begin{cases} x = \rho.\cos\left(\tilde{\theta}\right).\cos(\varphi) \\ y = \rho.\sin\left(\tilde{\theta}\right).\cos(\varphi) \\ \quad z = \rho.\sin(\varphi) \end{cases} \qquad [34]$$

où

$$\rho = \frac{\left(R_b^{P_{Txi}\,2} - L_i^2\right).L_j.\cos\left(\tilde{\theta} - \theta_j\right) - \left(R_b^{P_{Txj}\,2} - L_j^2\right).L_i.\cos\left(\tilde{\theta} - \theta_i\right)}{2.R_b^{P_{Txi}}.L_j.\cos\left(\tilde{\theta} - \theta_j\right) - 2.R_b^{P_{Txj}}.L_i\cos\left(\tilde{\theta} - \theta_i\right)} \qquad [35]$$

-    La seconde partie consiste à caractériser par sa position la zone de localisation correspondant à la zone d'intersection des deux ellipsoïdes (zone correspondant aux positions probables de la cible). Pour ce faire, on applique par exemple le procédé décrit dans la demande de brevet français n° 06 10961 déposée par la demanderesse le 15/12/2006. Ce procédé renvoie une liste de pavés jointifs décrivant, si elle existe, la zone d'intersection des ellipsoïdes de localisation utilisées, de manière connue, pour la localisation fine de la cible dans les systèmes radars bistatiques. Chaque pavé correspond à un parallélépipède caractérisé par la position de son centre et la largeur de chacun de ses cotés, la réunion de ces pavés englobant la zone d'intersection.

L'ensemble de ces pavés est ici exploité pour représenter cette zone par une position moyenne et une matrice de covariance. Ces deux quantités sont évaluées comme suit :

Selon l'invention, on évalue la probabilité de chacun des pavés solutions obtenus en appliquant le procédé décrit dans la demande de brevet citée précédemment, en mettant en correspondance les mesures des distances bistatiques issues des pistes élémentaires et la projection du centre du pavé dans les bases bistatiques correspondant aux mesures (i.e. aux pistes élémentaires). Si l'on note $x^m$ la position, dans le repère de référence, du centre d'un pavé m constituant une solution, sa distance bistatique dans la base bistatique associée à la première piste s'écrit :

$$ r_b^{i,m} = \left\| x^m - x^{Txi} \right\|_2 + \left\| x^m - x^{Rx} \right\|_2 \qquad [36] $$

En notant $\left( \tilde{r}_b^{i,m}, \sigma_{\tilde{r}_b^{i,m}} \right)$ la distance bistatique associée au plot de la piste $P_{Txi}$ et son écart-type, la probabilité du pavé m d'appartenir à la mesure de distance bistatique dans la base i est prise égale à

$$ P_{r_b^{i,m}} = 1 - \mathrm{Erf}\left( \frac{\left| \tilde{r}_b^{i,m} - r_b^{i,m} \right|}{\sigma_{\tilde{r}_b^i} \sqrt{2}} \right) \qquad [37] $$

où Erf correspond à la fonction Erreur Gaussienne classique :

$$ \mathrm{Erf}(x) = \frac{1}{\sqrt{\pi}} \int_0^x e^{-t^2} dt \qquad [38] $$

Ce calcul de probabilité est itéré sur tous les pavés et sur toutes les bases bistatique (ici deux). En notant $N_p$ le nombre total de pavé, la probabilité finale du pavé m s'obtient comme suit :

$$ P^m = \frac{P_{r_b^{i,m}} . P_{r_b^{j,m}}}{\sum_{k=1}^{N_p} P_{r_b^{i,k}} . P_{r_b^{j,k}}} \qquad [39] $$

La zone d'incertitude est, selon l'invention, caractérisée par sa moyenne et sa matrice de covariance, calculée comme suit à partir des probabilités précédentes :

$$ \overline{x} = \sum_{k=1}^{N_p} P^k x^k \qquad [41] $$

et

$$\boldsymbol{\Sigma}_{\mathbf{x}} = \sum_{k=1}^{N_p} P^k \left(\mathbf{x}^k - \overline{\mathbf{x}}\right)\left(\mathbf{x}^k - \overline{\mathbf{x}}\right)^{\prime} = \begin{pmatrix} \sigma_{xx}^2 & \sigma_{xy}^2 & \sigma_{xz}^2 \\ \sigma_{xy}^2 & \sigma_{yy}^2 & \sigma_{yz}^2 \\ \sigma_{xz}^2 & \sigma_{yz}^2 & \sigma_{zz}^2 \end{pmatrix} \qquad [41]$$

Dans l'hypothèse favorable où l'association est considérée comme vraisemblable, la troisième étape du module d'association est engagée.

Le test de cohérence en vitesse mis en oeuvre au cours de cette troisième étape, permet de confirmer les résultats de tests de l'étape précédente. Il consiste à déterminer, sous une hypothèse que les deux pistes élémentaires considérées sont liées à la même cible, la vitesse de cette dernière, vitesse exprimée par ses composantes $v_x$ et $v_y$ dans le repère cartésien de référence lié au radar (i.e. au récepteur).

La composante $v_z$ de la vitesse n'est ici pas considérée dans la mesure où, pour la majorité des cibles, la vitesse ascensionnelle est négligeable par rapport aux autres composantes et que sa détermination nécessite de traiter les informations élaborées non pas par deux, mais trois bases bistatiques distinctes, ce qui complique souvent inutilement les calculs.

La détermination de la vitesse supposée de la cible consiste ainsi, selon l'invention, à résoudre le système linéaire suivant :

$$\begin{cases} v_b^i = f_{T_x^i}\left(\begin{bmatrix} x^t & v_x^t & y^t & v_y^t \end{bmatrix}\right) \\ v_b^j = f_{T_x^j}\left(\begin{bmatrix} x^t & v_x^t & y^t & v_y^t \end{bmatrix}\right) \end{cases} \approx \begin{bmatrix} v_b^i \\ v_b^j \end{bmatrix} = A_{T_x^i,T_x^j}^{x^t,y^t} \begin{bmatrix} v_x^t \\ v_y^t \end{bmatrix} \qquad [42]$$

avec

$$A_{T_x^i,T_x^j}^{x^t,y^t} = \begin{pmatrix} \dfrac{x^t - x^{T_c^i}}{\left\| x^t - x^{T_c^i} \right\|_2} + \dfrac{x^t - x^{R_x}}{\left\| x^t - x^{R_x} \right\|_2} & \dfrac{y^t - y^{T_c^i}}{\left\| y^t - y^{T_c^i} \right\|_2} + \dfrac{y^t - y^{R_x}}{\left\| y^t - y^{R_x} \right\|_2} \\[4ex] \dfrac{x^t - x^{T_c^j}}{\left\| x^t - x^{T_c^j} \right\|_2} + \dfrac{x^t - x^{R_x}}{\left\| x^t - x^{R_x} \right\|_2} & \dfrac{y^t - y^{T_c^j}}{\left\| y^t - y^{T_c^j} \right\|_2} + \dfrac{y^t - y^{R_x}}{\left\| y^t - y^{R_x} \right\|_2} \end{pmatrix} \qquad [43]$$

et où $x^t$ et $y^t$ représentent les coordonnées de la cible obtenues à l'issue du test n° 2 de l'étape précédente. Les inconnues du système sont ici les valeurs $v_x^t$ et $v_y^t$ des composantes cartésiennes du vecteur vitesse de la cible.

Par suite le test de cohérence consiste à déterminer si le module de cette vitesse supposée est inférieur à une vitesse maximale donnée. Dans l'affirmative, la vraisemblance de l'association des deux pistes élémentaires est confirmée. Dans le cas contraire, en revanche, l'association est abandonnée.

Dans l'hypothèse favorable où l'association est considérée comme confirmée, la quatrième étape du module 62 d'initialisation est engagée (initialisation d'une piste globale). L'état initial de la piste fusionnée globale est alors représenté par une grandeur moyenne $x_{init}$ et une matrice de covariance $\Sigma_{x_{init}}$ construites à partir des résultats obtenus à l'issue des deuxième et troisième étapes. On peut écrire:

$$x_{init} = \begin{bmatrix} x^t & v_{x^t} & y^t & v_{y^t} & z^t & 0 \end{bmatrix}^{\prime} \qquad [44]$$

et

$$\Sigma_{x_{init}} = \begin{pmatrix} \sigma^2_{x^t x^t} & 0 & \sigma^2_{x^t y^t} & 0 & \sigma^2_{x^t z^t} & 0 \\ 0 & \sigma^2_{v_{x^t}} & 0 & \sigma^2_{v_{y^t},v_{y^t}} & 0 & 0 \\ \sigma^2_{x^t y^t} & 0 & \sigma^2_{y^t y^t} & 0 & \sigma^2_{y^t z^t} & 0 \\ 0 & \sigma^2_{v_{y^t},v_{y^t}} & 0 & \sigma^2_{v_{y^t}} & 0 & 0 \\ \sigma^2_{x^t z^t} & 0 & \sigma^2_{y^t z^t} & 0 & \sigma^2_{z^t z^t} & 0 \\ 0 & 0 & 0 & 0 & 0 & \sigma^2_{v_{z^t}} \end{pmatrix} \qquad [45]$$

où :

$$\begin{pmatrix} \sigma^2_{v_{x^t}} & \sigma^2_{v_{y^t},v_{y^t}} \\ \sigma^2_{v_{y^t},v_{y^t}} & \sigma^2_{v_{y^t}} \end{pmatrix} = \begin{pmatrix} A^{x^t,y^t}_{T^i_x,T^j_x} \end{pmatrix}^{-1} \begin{pmatrix} \sigma^2_{v^i_b} & 0 \\ 0 & \sigma^2_{v^j_b} \end{pmatrix} \begin{pmatrix} \begin{pmatrix} A^{x^t,y^t}_{T^i_x,T^j_x} \end{pmatrix}^{-1} \end{pmatrix}' \qquad [46]$$

avec $\sigma^2_{v_{z^t}} = \mathrm{cte}$

La quatrième étape du module d'initialisation 62 est finalement suivie par la cinquième et dernière étape qui consiste à essayer d'agréger à la piste globale d'autres pistes élémentaires venant des bases bistatiques non mises à contribution lors de l'initialisation de la piste globale nouvellement créée (N-2 bases pour un ensemble total de N bases). Le processus d'association pistes élémentaires-pistes globales implémenté à ce stade est identique au processus implémenté par le module 63. Il ne concerne cependant que les pistes élémentaires pour lesquelles une agrégation à une piste globale déjà formée (opération réalisée par le module 63), n'a pas été possible.

Le module 63 d'association "pistes élémentaires-pistes globales" ou module d'association, cherche d'une part à confirmer la vraisemblance de des associations déjà réalisées et d'autre part à étendre le nombre de base bistatique qui contribuent à l'entretien des pistes globales en cours. A ce titre, il est effectue les trois tâches suivantes :

- confirmer à l'instant k considéré l'appartenance des pistes élémentaires aux pistes globales auxquelles elles étaient déjà associées à l'instant k-1. Si à l'instant k, l'appartenance d'une piste élémentaire donnée à une piste globale n'est plus avérée, alors la piste élémentaire est dissociée de la piste globale. Elle devient de ce fait disponible, soit pour une association avec une autre piste globale à l'instant k, soit, à l'instant k+1, pour la constitution avec une autre piste élémentaire également non associée, d'une nouvelle piste globale (module 65).
- rechercher si une ou plusieurs pistes élémentaires nouvelles, non encore associées, peuvent être associées à des pistes globales existantes.
- rechercher si des pistes élémentaires peuvent être associées à des pistes globales en prédiction depuis q cycles.

Selon l'invention, l'opération d'association d'une piste élémentaire à une piste globale vise à élargir le nombre de base bistatiques contributrices. Pour ce faire on recherche, parmi les pistes élémentaires issues des bases bistatiques non encore contributrices, si certaines ne pourraient pas être associées à la piste globale considérée en imposant, dans le cas ou plusieurs pistes élémentaires candidates seraient identifiées, le choix de la plus probable. Le processus d'association est itéré sur l'ensemble des pistes globale en cours d'entretien. Il est réalisé comme suit :

**Boucle sur les Bases Bistatiques (indice b)**

Recherche des pistes globales {gtrk$_{\backslash b}$} ne contenant pas la base b.

**Fin Boucle**

**Boucle sur les pistes globales** {gtrk$_{\backslash b}$} **(indice i)**

**Boucle sur les pistes élémentaires de la base bistatique sous test (indice m)**

Calcul des distance statistique $\gamma_{i,m}$ (image de la vraisemblance) entre les pistes globales retenues et les pistes élémentaires.

**Fin Boucle sur les pistes élémentaires**

**Fin Boucle sur les pistes globales**

**Boucle sur les pistes globales {gtrk$_{\backslash b}$} (indice i)**

**Boucle sur les pistes élémentaires de la base bistatique sous test (indice m)**

Recherche de la piste élémentaire p$_{etrk1}$ la plus vraisemblable (i.e. qui minimise une distance statistique tout en restant inférieure à un niveau maximal) :

$$\gamma_{ref} = \text{argmin}_{\{m\}}(\gamma_{i,m} < \gamma_{max}) = \gamma_{i,p_{etrk2}}$$

Recherche de la piste élémentaire p$_{etrk2}$ la plus vraisemblable après p$_{etrk1}$ :

$$\gamma_{mem} = \text{argmin}_{\{m \neq p_{etrk1}\}}(\gamma_{i,m} \leq \gamma_{max}) = \gamma_{i,p_{etrk2}}$$

**Fin Boucle sur les pistes élémentaires**

**Si** p$_{etrk1}$ et p$_{etrk2}$ n'existent pas alors on passe à l'indice i suivant.

**Fin Si**

**Si** p$_{etrk1}$ existe mais pas p$_{etrk2}$ alors l'association existent. L'association entre la piste élémentaire p$_{etrk1}$ et la piste globale i est prononcée.

**Fin Si**

**Si** petrk1 et petrk2 existent alors :

**Boucle sur les pistes globales hors piste i (indice n)**

Recherche si une piste globale n'aurait pas une vraisemblance avec la piste élémentaire p$_{etrk1}$ plus importante que la piste i. Ce test revient à vérifier s'il existe un indice n$_{inv}$ tel que $\gamma_{n_{inv},p_{etrk}} \geq \gamma_{I,p_{etrk1}}$.

**Fin Boucle sur les pistes globales**

**Si** aucun indice n$_{inv}$ n'a été trouvé, l'association entre la piste élémentaire p$_{etrk1}$ et la piste globale i est prononcée.
**Sinon,** l'association entre la piste élémentaire p$_{etrk2}$ et la piste globale i est prononcée.

**Fin Si**

Si un indice n$_{inv}$ a été trouvé, l'association entre la piste élémentaire petrk1 et la piste globale i est invalidée.

**Fin Si**

**Fin Boucle sur les pistes élémentaires**

Le calcul de la distance statistique y entre une piste globale i et une piste élémentaire j d'une base b s'obtient comme suit en projetant la piste globale dans la base bistatique b :

Soit g la fonctionnelle de passage (explicitée équation [48]) des coordonnées cartésiennes X du repère ($R_x$, x, y, z) aux coordonnées bistatiques Y de la base bistatique b, où $X = [x\ v_x\ y\ v_y\ z\ v_z]$ et $Y = [r_b\ v_b\theta]'$. Si $(\tilde{x}_k, \tilde{\Sigma}x_k)$ représentent respectivement la prédiction de l'état de la piste globale à l'instant k et sa covariance, alors sa projection dans la base bistatique s'écrit $\tilde{y}_k = g(\tilde{x}_k)$ avec:

$$g\left(\begin{bmatrix} x_k \\ v_{x,k} \\ y_k \\ v_{y,k} \\ z_k \\ v_{z,k} \end{bmatrix}\right) = \begin{bmatrix} \left(\left(x_k - x^{T_x}\right)^2 + \left(y_k - y^{T_x}\right)^2 + \left(z_k - z^{T_x}\right)^2\right)^{1/2} + \left(\left(x_k - x^{R_x}\right)^2 + \left(y_k - y^{R_x}\right)^2 + \left(z_k - z^{R_x}\right)^2\right)^{1/2} \\ \dfrac{(x_k - x^{T_x})v_{x,k} + (y_k - y^{T_x})v_{y,k} + (z_k - z^{T_x})v_{z,k}}{\left(\left(x_k - x^{T_x}\right)^2 + \left(y_k - y^{T_x}\right)^2 + \left(z_k - z^{T_x}\right)^2\right)^{1/2}} + \dfrac{(x_k - x^{R_x})v_{x,k} + (y_k - y^{R_x})v_{y,k} + (z_k - z^{R_x})v_{z,k}}{\left(\left(x_k - x^{R_x}\right)^2 + \left(y_k - y^{R_x}\right)^2 + \left(z_k - z^{R_x}\right)^2\right)^{1/2}} \\ \mathrm{atan}\left(\dfrac{y_k - y^{R_x}}{x_k - x^{R_x}}\right) \end{bmatrix} \quad [47]$$

En notant $(Y_k, R_k)$ l'état de la piste élémentaire (restreint aux trois composantes bistatiques $r_b$, $v_b$ et $\theta$ précédemment évoquées) et sa covariance, la distance statistique $\gamma$ s'obtient comme suit :

$$\gamma = v_k' \Gamma_k^{-1} v_k \qquad [48]$$

avec $v_k = Y_k - g(\tilde{x}_k)$ et $\Gamma_k = G_k \tilde{\Sigma}_{x_k} G_k' + R_k$, $G_k$ correspondant à la linéarisation de g en $\tilde{x}_k$ : $G_k = \left.\dfrac{\partial g}{\partial x}\right|_{x=\tilde{x}_k}$ .

Les opérations d'initialisation 62 et d'association 63 ayant été effectuées, le module 64 de localisation selon l'invention, procède à la localisation des pistes globales. Il peut s'agir selon le cas de pistes globales nouvellement formées en fonction de l'état des pistes élémentaires à l'instant k considéré ou bien de pistes globales préexistantes et dont l'existence est confirmée par l'état des pistes élémentaires à cet instant. Il permet de construire les observations de position qui sont utilisées par le module de pistage 65 pour réaliser l'entretien des pistes globales. Le vecteur d'observation contient d'une part le résultat de la fusion des distances bistatiques extraites des pistes élémentaires et d'autre part les vitesses bistatiques extraites des ces mêmes pistes élémentaires.

Selon l'invention, la fusion des distances bistatiques, fournies dans l'état des pistes élémentaires, est réalisée en reconstruisant la position de la cible à partir de plusieurs distances bistatique issues des différentes couples émetteur/récepteur. Cette reconstruction peut être réalisée par tout procédé approprié connu, en particulier par le procédé mis en oeuvre dans le module 62 d'initialisation des pistes globales, pour le test de cohérence en distance effectué par la seconde étape (seconde partie); le procédé étant ici étendu au nombre de piste élémentaires impliquées à l'instant k dans la piste globale dont on veut construire le vecteur d'observation.

Le vecteur d'observation est alors défini comme suit:

$$y_{gt} = \begin{bmatrix} x_f & y_f & z_f & v_b^{et1} & v_b^{et2} & \cdots & v_b^{etn} \end{bmatrix}' \qquad [49]$$

et

$$R_{y_{gt}} = \begin{pmatrix} \sigma^2_{x_f} & \sigma^2_{x_f y_f} & \sigma^2_{x_f z_f} & 0 & 0 & \cdots & 0 \\ \sigma^2_{x_f y_f} & \sigma^2_{y_f} & \sigma^2_{y_f z_f} & 0 & 0 & \cdots & 0 \\ \sigma^2_{x_f z_f} & \sigma^2_{y_f z_f} & \sigma^2_{z_f} & 0 & 0 & \cdots & 0 \\ 0 & 0 & 0 & \sigma^2_{v_b^{et1}} & 0 & \cdots & 0 \\ 0 & 0 & 0 & 0 & \sigma^2_{v_b^{et2}} & \cdots & 0 \\ \vdots & \vdots & \vdots & \vdots & \vdots & \ddots & 0 \\ 0 & 0 & 0 & 0 & 0 & 0 & \sigma^2_{v_b^{etn}} \end{pmatrix} \qquad [50]$$

$R_{y_{gt}}$ représentant la covariance de $y_{gt}$.

Les paramètres relatifs aux pistes globales à l'instant k considéré ayant été calculés, le module 65 de pistage procède à l'estimation de l'état de la piste, à sa prédiction à l'instant k+1 et à la prédiction de sa mesure associée. Cette dernière est destinée à être utilisée par le module d'association 63 pour évaluer si à l'instant k+1 une piste élémentaire donnée peut être associée à une piste globale existante. On rappelle ici que selon l'invention, une piste élémentaire n'est associée, à un instant k donné, qu'à une seule piste globale.

Selon l'invention, l'évolution de l'état de la cible est modélisée par un processus aléatoire $\{x_k\}$ à valeur dans $\mathbb{R}^6$, décrivant la vitesse et la position de la cible considérée, et dont les composantes sont: $[x \; v_x \; y \; v_y \; z \; v_z]$.

Ce processus est régi par l'équation d'évolution linéaire en temps discret correspondant au modèle position/vitesse suivant :

$$x_k = Fx_{k-1} + w_k \qquad [51]$$

avec

$$F = \begin{bmatrix} 1 & T & 0 & 0 & 0 & 0 \\ 0 & 1 & 0 & 0 & 0 & 0 \\ 0 & 0 & 1 & T & 0 & 0 \\ 0 & 0 & 0 & 1 & 0 & 0 \\ 0 & 0 & 0 & 0 & 1 & T \\ 0 & 0 & 0 & 0 & 0 & 1 \end{bmatrix}$$

et dans laquelle le processus $\{w_k\}$, à valeur dans $\mathbb{R}^6$, est un bruit blanc gaussien centré, de matrice de covariance Q constante :

$$Q = \sigma_{v_{xy}}^2 \begin{pmatrix} T^3/3 & T^2/2 & 0 & 0 & 0 & 0 \\ T^2/2 & T & 0 & 0 & 0 & 0 \\ 0 & 0 & T^3/3 & T^2/2 & 0 & 0 \\ 0 & 0 & T^2/2 & T & 0 & 0 \\ 0 & 0 & 0 & 0 & 0 & 0 \\ 0 & 0 & 0 & 0 & 0 & 0 \end{pmatrix} + \sigma_{v_z}^2 \begin{pmatrix} 0 & 0 & 0 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \\ 0 & 0 & 0 & 0 & T^3/3 & T^2/2 \\ 0 & 0 & 0 & 0 & T^2/2 & T \end{pmatrix}$$

.

Où T correspond à l'écart de temps entre les instants k et k+1.

Le choix de ce modèle d'état est ici fixé par la nature des cibles prioritaires du radar.

Le processus d'observation regroupe quant à lui, les mesures fusionnées de position exprimées dans le repère cartésien du radar et les mesures de vitesse bistatique issues de chaque piste élémentaire contribuant à la piste globale. Le modèle d'observation est donc non-linéaire et à dimension variable dans le temps.

Le processus d'observation est en outre défini comme un processus aléatoire $\{y_k\}$ à valeur dans $\mathbb{R}^{3+nb\_cet}$, où nb_cet représente le nombre de pistes élémentaires associées ("cet" est l'acronyme de la dénomination anglo-saxonne "contributive elementary track"). Ce processus d'observation $\{y_k\}$ de composantes $\begin{bmatrix} x & y & z & v_b^{et1} & v_b^{et2} & \cdots & v_b^{etn} \end{bmatrix}$ est défini par l'équation d'observation:

$$y_k = h(x_k) + v_k \qquad\qquad [53]$$

dans laquelle $\{v_k\}$ est un bruit blanc gaussien dont la matrice de covariance $R_k$ définie plus haut (dans la définition du vecteur d'observation) correspond aux précisions des mesures à l'instant k. h représente ici la fonctionnelle d'observation du processus d'évolution définies de $\mathbb{R}^6$ vers $\mathbb{R}^{3+nb\_cet}$ comme suit:

$$h\left(\begin{bmatrix} x \\ y \\ z \\ v_b^{et1} \\ v_b^{et2} \\ \vdots \\ v_b^{etn} \end{bmatrix}\right) = \begin{bmatrix} \dfrac{(x-x^{T_x^{et1}})v_x + (y-y^{T_x^{et1}})v_y + (z-z^{T_x^{et1}})v_z}{\left[\left(x-x^{T_x^{et1}}\right)^2 + \left(y-y^{T_x^{et1}}\right)^2 + \left(z-z^{T_x^{et1}}\right)^2\right]^{1/2}} + \dfrac{(x-x^{R_x})v_x + (y-y^{R_x})v_y + (z-z^{R_x})v_z}{\left[\left(x-x^{R_x}\right)^2 + \left(y-y^{R_x}\right)^2 + \left(z-z^{R_x}\right)^2\right]^{1/2}} \\[3em] \dfrac{(x-x^{T_x^{et2}})v_x + (y-y^{T_x^{et2}})v_y + (z-z^{T_x^{et2}})v_z}{\left[\left(x-x^{T_x^{et2}}\right)^2 + \left(y-y^{T_x^{et2}}\right)^2 + \left(z-z^{T_x^{et2}}\right)^2\right]^{1/2}} + \dfrac{(x-x^{R_x})v_x + (y-y^{R_x})v_y + (z-z^{R_x})v_z}{\left[\left(x-x^{R_x}\right)^2 + \left(y-y^{R_x}\right)^2 + \left(z-z^{R_x}\right)^2\right]^{1/2}} \\[3em] \vdots \\[2em] \dfrac{(x-x^{T_x^{etn}})v_x + (y-y^{T_x^{etn}})v_y + (z-z^{T_x^{etn}})v_z}{\left[\left(x-x^{T_x^{etn}}\right)^2 + \left(y-y^{T_x^{etn}}\right)^2 + \left(z-z^{T_x^{etn}}\right)^2\right]^{1/2}} + \dfrac{(x-x^{R_x})v_x + (y-y^{R_x})v_y + (z-z^{R_x})v_z}{\left[\left(x-x^{R_x}\right)^2 + \left(y-y^{R_x}\right)^2 + \left(z-z^{R_x}\right)^2\right]^{1/2}} \end{bmatrix} \quad [54]$$

Par suite le module de pistage 65 selon l'invention procède pour chaque instant de mesure k, à la prédiction des composantes du vecteur d'état correspondant à chaque piste fusionnée globale à partir de l'estimation des composantes du vecteur d'état à l'instant k-1, cette estimation étant elle-même réalisée à partir du vecteur d'observation élaboré au moyen des mesures relatives pour l'instant k-1 aux pistes élémentaires associées à la piste globale considérée et de la prédiction des composantes du vecteur d'état à l'instant k-1. Le procédé mis en oeuvre est ici un procédé récursif décrit par à un filtre de Kalman étendu dont les équations de définition sont les suivantes:

Etat prédit:

$$\tilde{x}_k = F\hat{x}_{k-1} \qquad [55]$$

Covariance prédite:

$$\tilde{\Sigma}_{x_k} = F\hat{\Sigma}_{x_{k-1}}F' + Q \qquad [56]$$

Linéarisation de la fonctionnelle d'observation:

$$H_k = \left.\frac{\partial h}{\partial x}\right|_{x=\tilde{x}_k} \qquad [57]$$

Innovation:

$$i_k = y_k - h(\tilde{x}_k) \qquad [58]$$

Covariance de l'innovation :

$$\Sigma_{i_k} = H_k\tilde{\Sigma}_{x_k}H_k' + R_k \qquad [59]$$

Gain de filtrage:

$$K_k = \Sigma_{x_k} H_k \Sigma_{i_k}^{-1} \qquad\qquad [60]$$

Etat estimé:

$$\hat{x}_k = \tilde{x}_k + K_k i_k \qquad\qquad [61]$$

Covariance estimée:

$$\hat{\Sigma}_{x_k} = \left(I - K_k H_k\right)\tilde{\Sigma}_{x_k} \qquad\qquad [62]$$

L'état initial $(x_0, \Sigma_{x_0})$ est ici supposé gaussien.

A l'issu de l'étape 24 de fusion aval, on dispose donc pour chaque instant k de mesure d'une liste de pistes fusionnées globales, chaque piste étant caractérisée par la valeur du vecteur d'état $x_k$ de la cible à laquelle elle correspond, cette piste globale est alimentée par les mesures associées aux plots fusionnés représentant les différentes pistes élémentaires obtenues à l'issue de l'étape 23 de fusion amont et associées à la pistes globale considérée. Le procédé selon l'invention telle que décrit ici, permet donc avantageusement de réaliser la fusion d'informations provenant de différentes bases bistatiques, chaque base bistatique pouvant traiter des signaux au travers de différents canaux de réception. Cette fusion est avantageusement rendue possible bien que les mesures effectuées par les différentes bases bistatiques ne soient initialement pas exprimées dans le même repère de référence.

**Revendications**

1. Procédé de pistage pour systèmes radars passifs multicanaux, ledit système comportant un récepteur exploitant les émissions produites par une pluralité d'émetteurs d'opportunité, chaque émetteur constituant avec le récepteur une base bistatique, l'émission produite par chacun des émetteurs présentant un spectre constitué de différents canaux fréquentiels dont le traitement conduit à chaque instant à la constitution de plots, chaque plot étant **caractérisé par** un vecteur à trois composantes constituées par une mesure de distance bistatique, une mesure de vitesse bistatique et une mesure d'azimut, ainsi que par la matrice diagonale 3x3 des erreurs associées à ces mesures, **caractérisé en ce qu'**il comporte:

   - une première étape (23) de fusion amont appliquée séparément à chaque base bistatique (22), opérant directement dans l'espace des composantes des vecteurs caractérisant les plots, et mettant en oeuvre une opération (22) de constitution de piste élémentaires, réalisant l'identification des plots des différents canaux fréquentiels (21) relatif à une même cible et la fusion instantanée de ces plots, l'opération (22) de constitution de piste élémentaires comportant elle-même pour chaque instant de mesure:

      - une première sous étape (221) de fusion de plots pour associer les plots élémentaires des différents canaux de réception de chaque base bistatique qui présentent, pour un instant de mesure donnée, des vecteurs de mesure $y_j$ proches les uns des autres et former des plots fusionnés, chaque plot fusionné j (25) étant **caractérisé par** un vecteur de mesure $y_j = (r_b, v_b, \theta)$ où $r_b$, $v_b$ et $\theta$ représentent respectivement les mesures de distance bistatique, de vitesse bistatique et d'azimut de l'objet détecté par la base bistatique considérée;
      - une deuxième sous étape (222) de construction de pistes élémentaires à partir des plots fusionnés, une piste élémentaire étant constituée par la succession dans le temps des plots fusionnés relatifs à une même cible, chaque cible détectée étant représentée par une piste bistatique élémentaire (25) dont les caractéristiques (attributs) évoluent dans le temps en fonction des plots qui lui sont associés; la sous étape (221) de fusion de plots comportant un module (31) d'agrégation de plots qui associe les plots élémentaires des différents canaux de réception de chaque d'une même base bistatique qui présentent, pour un instant de mesure donné, des vecteurs de mesure $y_j$ proches les uns des autres, compte tenu des précisions des mesures, et former forme des plots fusionnés, l'agrégation de deux plots élémentaires p1 et p2 est réalisée si les vecteurs de mesure y1 et y2 caractérisant ces plots vérifient le critère de proximité défini par les trois relations suivantes:

$$\left[r_b^{p1} - 2\sigma_{r_b^{p1}}; r_b^{p1} + 2\sigma_{r_b^{p1}}\right] \bigcap \left[r_b^{p2} - 2\sigma_{r_b^{p2}}; r_b^{p2} + 2\sigma_{r_b^{p2}}\right] \neq \varnothing$$

et

$$\left[v_b^{p1} - 2\sigma_{v_b^{p1}}; v_b^{p1} + 2\sigma_{v_b^{p1}}\right] \bigcap \left[v_b^{p2} - 2\sigma_{v_b^{p2}}; v_b^{p2} + 2\sigma_{v_b^{p2}}\right] \neq \varnothing$$

et

$$\left[\theta^{p1} - 2\sigma_{\theta^{p1}}; \theta^{p1} + 2\sigma_{\theta^{p1}}\right] \bigcap \left[\theta^{p2} - 2\sigma_{\theta^{p2}}; \theta^{p2} + 2\sigma_{\theta^{p2}}\right] \neq \varnothing$$

où $(\sigma_{r_b^{p1}}; \sigma_{v_b^{p1}}, \sigma_{\theta^{p1}})$ et $(\sigma_{r_b^{p2}}; \sigma_{v_b^{p2}}, \sigma_{\theta^{p2}})$ représentent respectivement les composantes des matrices de covariance R associées aux vecteurs de mesures $y_j(r_b, v_b, \theta)$ des plots considérés ; avec

$$R = \begin{pmatrix} \sigma_{r_b}^2 & 0 & 0 \\ 0 & \sigma_{v_b}^2 & 0 \\ 0 & 0 & \sigma_\theta^2 \end{pmatrix}$$

$r_b$, $v_b$ et $\theta$ représentant respectivement les mesures de distance bistatique, de vitesse bistatique et d'azimut caractérisant le plot Pi considéré;

- une seconde étape (24) de fusion aval élaborant une piste globale (26) à partir des pistes élémentaires (25) relatives à une même cible, détectée simultanément par plusieurs bases bistatiques, la seconde étape mettant en oeuvre:

- un module (62) d'initialisation de pistes globales, une piste globale étant initialisée par association de deux pistes élémentaires élaborées par deux bases bistatiques distinctes (62);
- un module (63) d'entretien des pistes globales formées, l'enrichissement étant réalisé par recherche de pistes élémentaires élaborées par d'autres bases bistatiques susceptibles d'être associées à une piste globale existante, les pistes élémentaires pouvant être associées à une piste globale donnée étant déterminées en projetant les attributs de la piste globale considérée dans chacun des repères de référence des bases bistatiques dont aucune des pistes élémentaires n'a encore été associée à la piste globale considérée et par comparaison, pour chacune de ces bases bistatiques, des valeurs de attributs projetés de la piste globale aux attributs des différentes pistes élémentaires relatives 5 à la base bistatique considérée;
- une opération de fusion des informations bistatiques des différentes pistes élémentaires fusionnées consistant, dans un premier temps, à mettre en oeuvre un module (64) de localisation exploitant les distances bistatiques des pistes élémentaires pour déterminer une estimation de la position de la piste globale à partir des ellipsoïdes correspondant à ces distances bistatiques, puis, dans un second temps, à mettre en oeuvre un module (65) de filtrage non linéaire exploitant simultanément l'estimation de position réalisée et les vitesses bistatiques caractérisant les pistes élémentaires contribuant à l'entretien de la piste globale.

2. Procédé selon la revendication 1, **caractérisé en ce que** l'étape 221 de fusion de plots comporte en outre les modules suivants:

- un deuxième module (32) de fusion des plots élémentaires agrégés qui élabore pour chaque agrégat un vecteur de mesure résultant $y(r_b, v_b, \theta)$ unique à partir des vecteurs de mesures $y_j(r_b, v_b, \theta)$ des plots formant l'agrégat, y étant défini par les relations suivantes:

$$y = R \sum_{j=1}^{N} R_j^{-1} y_j \quad \text{et} \quad R = \left( \sum_{j=1}^{N} R_j^{-1} \right)^{-1}$$

où $R_j$ représente la matrice de covariance associée au vecteur de mesures $y_j$, le plot fusionné étant utilisé pour former une piste élémentaire donnée;

- un troisième module (34) qui contrôle l'état des pistes élémentaires formées pour déterminer la vraisemblance d'une piste élémentaire en considérant le nombre de plots élémentaires formant l'agrégat à l'origine du plot fusionné utilisé pour constituer la piste.

3. Procédé selon une des revendications précédentes, **caractérisé en ce que** le module (62) d'initialisation de l'étape de fusion avale (24) comporte successivement les cinq étapes suivantes :

- une première étape qui teste la cohérence en azimut des pistes élémentaires candidates en calculant la différence des azimuts et en comparant celle-ci à un seuil donné ;
- une deuxième étape qui teste la cohérence en distance des pistes élémentaires candidates, cette étape mettant en oeuvre un test grossier basé sur le calcul analytique de l'intersection de deux ellipsoïdes de localisation et un test fin basé sur une localisation en trois dimensions qui permet de déterminer la position initiale de la piste globale à initialiser;
- une troisième étape qui teste la cohérence en vitesse des pistes élémentaires candidates, en calculant la vitesse cartésienne initiale de la piste globale à initialiser, à partir des vitesses bistatiques caractérisant les deux pistes bistatiques candidates et du résultat du module de localisation en trois dimensions;
- une quatrième étape qui procède à l'initialisation d'une piste globale à partir des résultats des tests précédents;
- une cinquième étape qui consiste à agréger à la piste globale initialisée des pistes élémentaires venant des bases bistatiques non mises à contribution lors de l'initialisation de la piste globale.

4. Procédé selon l'une des revendications précédentes, **caractérisé en ce que** le module de localisation (64) de la seconde étape de fusion aval (24) consiste à approcher la zone d'intersection des ellipsoïdes de localisation par une juxtaposition de pavés, chaque pavé correspondant à un parallélépipède **caractérisé par** la position de son centre et la largeur de chacun de ses cotés, la réunion de ces pavés englobant la zone d'intersection, et à extraire de l'ensemble des pavés qui englobe la zone, une valeur moyenne de position et une matrice de covariance associée, chaque pavé étant associé à une probabilité caractérisant sa cohérence par rapport aux distances bistatiques à l'origine de la zone d'intersection.

5. Procédé selon l'une des revendications précédentes, **caractérisé en ce que** le module (63) d'entretien des pistes globales de la seconde étape de fusion aval (24) met en oeuvre le calcul de la distance statistique $\gamma$ séparant la projection d'une piste globale dans une base bistatique b et une piste élémentaire de cette même base bistatique, candidate à la fusion, la distance statique $\gamma$ étant fonction des composantes bistatique, distance, vitesse et azimut caractérisant la piste élémentaire candidate à l'association et des composantes de la projection de l'état x de la piste globale dans la base bistatique b.

6. Procédé selon l'une des revendications précédentes, **caractérisé en ce que** le module (65) de filtrage non linéaire de la seconde étape de fusion aval (24) procède pour chaque instant de mesure k, à la prédiction $\tilde{x}_k$ des composantes du vecteur d'état x correspondant à chaque piste globale à partir de l'estimation $\hat{x}_{k-1}$ des composantes du vecteur d'état x à l'instant k-1, cette estimation étant elle-même réalisée à partir du vecteur d'observation $y_{k-1}$ élaboré au moyen des mesures relatives pour l'instant k-1 aux pistes élémentaires associées à la piste globale considérée et de la prédiction $\tilde{x}_{k-1}$ des composantes du vecteur d'état x à l'instant k-1, les composantes du vecteur d'observation étant composées du résultat de la fusion des distances bistatiques de chaque piste élémentaire, élaboré dans le module de localisation (64) des pistes globales de l'étape (24) de fusion aval et des vitesses bistatiques de ces mêmes pistes élémentaires obtenues à l'issue de l'étape (23) de fusion amont.

**Patentansprüche**

1. Verfahren zur Spurverfolgung für mehrkanalige passive Radarsysteme, wobei das System einen Empfänger aufweist, der die von mehreren Gelegenheitssendern erzeugten Sendungen benutzt, wobei jeder Sender mit dem Empfänger eine bistatische Basis bildet, wobei die von jedem der Sender erzeugte Sendung ein aus verschiedenen Frequenzkanälen gebildetes Spektrum hat, dessen Verarbeitung zur Bildung von Echozeichen zu jedem Zeitpunkt führt, wobei jedes Echozeichen durch einen Vektor mit drei Komponenten gekennzeichnet ist, bestehend aus einem bistatischen Distanzmesswert, einem bistatischen Geschwindigkeitsmesswert und einem Azimutmesswert, sowie durch die 3x3 Diagonalmatrix von mit diesen Messwerten assoziierten Fehlern, **dadurch gekennzeichnet, dass** es Folgendes beinhaltet:

- einen ersten stromaufwärtigen Fusionierungsschritt (23), separat angewendet auf jede bistatische Basis (22), der direkt im Raum der Komponenten der die Echozeichen charakterisierenden Vektoren arbeitet und einen Vorgang (22) des Bildens von elementaren Spuren ausführt, unter Realisierung der Identifikation von Echozeichen der verschiedenen Frequenzkanäle (21) in Bezug auf dasselbe Ziel und unter instantaner Fusionierung dieser Echozeichen, wobei der Vorgang (22) des Bildens von elementaren Spuren wiederum für jeden Messzeitpunkt Folgendes beinhaltet:

- einen ersten Teilschritt (221) des Fusionierens von Echozeichen zum Assoziieren der elementaren Echozeichen der verschiedenen Empfangskanäle jeder bistatischen Basis, die für einen gegebenen Messzeitpunkt Messvektoren $y_j$ haben, die nahe beieinander liegen und zum Bilden von fusionierten Echozeichen, wobei jedes fusionierte Echozeichen j (25) durch einen Messwertvektor $y_j = (r_b, v_b, \theta)$ gekennzeichnet ist, wobei $r_b$, $v_b$ und $\theta$ jeweils die Messwerte von bistatischer Distanz, bistatischer Geschwindigkeit und Azimut des von der betrachteten bistatischen Basis erkannten Objekts repräsentieren;

- einen zweiten Teilschritt (222) des Konstruierens von elementaren Spuren von den fusionierten Echozeichen, wobei eine elementare Spur durch die zeitliche Folge von fusionierten Echozeichen in Bezug auf dasselbe Ziel gebildet wird, wobei jedes erkannte Ziel durch eine bistatische elementare Spur (25) repräsentiert wird, deren Charakteristiken (Attribute) sich im Laufe der Zeit in Abhängigkeit von den Echozeichen entwickeln, die mit ihnen assoziiert sind;

wobei der Echozeichenfusionierungsteilschritt (221) ein Modul (31) zum Ansammeln von Echozeichen beinhaltet, das die elementaren Echozeichen der verschiedenen Empfangskanäle von jedem von einer selben bistatischen Basis assoziiert, die für einen gegebenen Messzeitpunkt Messvektoren $y_j$ aufweisen, die nahe beieinander liegen, unter Berücksichtigung der Präzisionsniveaus der Messwerte, und Gestalten von fusionierten Echozeichen, wobei das Ansammeln von zwei elementaren Echozeichen p1 und p2 vollendet ist, wenn die diese Echozeichen charakterisierenden Messwertvektoren y1 und y2 das durch die folgenden drei Relationen definierte Nähekriterium erfüllen:

$$\left[ r_b^{p1} - 2\sigma_{r_b^{p1}} ; r_b^{p1} + 2\sigma_{r_b^{p1}} \right] \cap \left[ r_b^{p2} - 2\sigma_{r_b^{p2}} ; r_b^{p2} + 2\sigma_{r_b^{p2}} \right] \neq \varnothing$$

und

$$\left[ v_b^{p1} - 2\sigma_{v_b^{p1}} ; v_b^{p1} + 2\sigma_{v_b^{p1}} \right] \cap \left[ v_b^{p2} - 2\sigma_{v_b^{p2}} ; v_b^{p2} + 2\sigma_{v_b^{p2}} \right] \neq \varnothing$$

und

$$\left[ \theta^{p1} - 2\sigma_{\theta^{p1}} ; \theta^{p1} + 2\sigma_{\theta^{p1}} \right] \cap \left[ \theta^{p2} - 2\sigma_{\theta^{p2}} ; \theta^{p2} + 2\sigma_{\theta^{p2}} \right] \neq \varnothing$$

wobei $\left( \sigma_{r_b^{p1}} ; \sigma_{v_b^{p1}}, \sigma_{\theta^{p1}} \right)$ und $\left( \sigma_{r_b^{p2}} ; \sigma_{v_b^{p2}}, \sigma_{\theta^{p2}} \right)$ jeweils die Komponenten der mit den Messwertvektoren $y_j(r_b, v_b, \theta)$ der betrachteten Echozeichen assoziierten Kovarianzmatrizen R repräsentieren; wobei

$$R = \begin{pmatrix} \sigma_{r_b}^2 & 0 & 0 \\ 0 & \sigma_{v_b}^2 & 0 \\ 0 & 0 & \sigma_{\theta}^2 \end{pmatrix},$$

wobei $r_b$, $v_b$ und $\theta$ jeweils die Messwerte von bistatischer Distanz, bistatischer Geschwindigkeit und Azimut repräsentieren, die das betrachtete Echozeichen Pi charakterisieren;
- einen stromabwärtigen zweiten Fusionierungsschritt (24) zum Erzeugen einer globalen Spur (26) von elementaren Spuren (25) in Bezug auf dasselbe Ziel, das gleichzeitig von mehreren bistatischen Basen erkannt wird, wobei der zweite Schritt Folgendes implementiert:

- ein Modul (62) zum Initialisieren von globalen Spuren, wobei eine globale Spur durch Assozation von zwei durch zwei getrennte bistatische Basen (62) erzeugte elementare Spuren initialisiert wird;
- ein Modul (63) zum Warten von gebildeten globalen Spuren, wobei die Erweiterung durch Suchen nach elementaren Spuren realisiert wird, die von anderen bistatischen Basen erzeugt werden, die wahrscheinlich mit einer existierenden globalen Spur assoziiert sind, wobei die elementaren Spuren, die mit einer gegebenen globalen Spur assoziiert werden können, durch Projizieren der Attribute der betrachteten globalen Spur in jedem der Referenzbezugspunkte der bistatischen Basen festgestellt werden, von denen bisher keine der elementaren Spuren mit der betrachteten globalen Spur assoziiert wurde, und durch Vergleichen, für jede dieser bistatischen Basen, der Werte von projizierten Attributen der globalen Spur mit den Attributen der verschiedenen relativen elementaren Spuren 5 an der betrachteten bistatischen Basis;
- einen Vorgang des Fusionierens von bistatischen Informationen der verschiedenen fusionierten elementaren Spuren, der erstens das Implementieren eines Lokalisierungsmoduls (64) unter Nutzung der bistatischen Distanzen der elementaren Spuren zum Feststellen einer Schätzung der Position der globalen Spur von Ellipsoiden entsprechend diesen bistatischen Distanzen, dann zweitens das Implementieren eines nichtlinearen Filterungsmoduls (65) unter gleichzeitiger Nutzung der realisierten Positionsschätzung und der bistatischen Geschwindigkeiten beinhaltet, die die elementaren Spuren charakterisieren, die zum Warten der globalen Spur beitragen.

2. Verfahren nach Anspruch 1, **dadurch gekennzeichnet, dass** der Echozeichenfusionierungsschritt 221 ferner die folgenden Module beinhaltet:

- ein zweites Modul (32) zum Fusionieren von angesammelten elementaren Echozeichen, das für jede Ansammlung einen einzigen resultierenden Messwertvektor $y(r_b, v_b, \theta)$ aus Messwertvektoren $y_j(r_b, v_b, \theta)$ der die Ansammlung bildenden Echozeichen erzeugt, wobei y durch die folgenden Relationen definiert wird:

$$y = R \sum_{j=1}^{N} R_j^{-1} y_j \quad \text{und} \quad R = \left( \sum_{j=1}^{N} R_j^{-1} \right)^{-1},$$

wobei $R_j$ die mit dem Messwertvektor $y_j$ assoziierte Kovarianzmatrix repräsentiert, wobei das fusionierte Echozeichen zum Bilden einer gegebenen elementaren Spur benutzt wird;
- ein drittes Modul (34), das den Zustand der elementaren Spuren steuert, gebildet zum Feststellen der Wahrscheinlichkeit einer elementaren Spur unter Betrachtung der Anzahl von elementaren Echozeichen, die die Ansammlung am Ursprung des zum Bilden der Spur benutzten fusionierten Echozeichens bilden.

3. Verfahren nach einem der vorherigen Ansprüche, **dadurch gekennzeichnet, dass** das Modul (62) zum Initialisieren des stromabwärtigen Fusionierungsschritts (24) nacheinander die folgenden fünf Schritte beinhaltet:

- einen ersten Schritt, der die Azimutkohärenz der elementaren Kandidatenspuren prüft, durch Berechnen der Differenz in den Azimuts und durch Vergleichen derselben mit einer gegebenen Schwelle;
- einen zweiten Schritt, der die Distanzkohärenz der elementaren Kandidatenspuren prüft, wobei dieser Schritt eine grobe Prüfung, die auf der analytischen Berechnung des Schnittpunkts von zwei Lokalisierungsellipsoiden basiert, und eine genaue Prüfung implementiert, die auf einer dreidimensionalen Lokalisierung basiert, die die Bestimmung der Anfangsposition der zu initialisierenden globalen Spur zulässt;
- einen dritten Schritt, der die Geschwindigkeitskohärenz der elementaren Kandidatenspuren prüft, durch Berechnen der kartesischen Anfangsgeschwindigkeit der zu initialisierenden globalen Spur auf der Basis von bistatischen Geschwindigkeiten, die die beiden bistatischen Kandidatenspuren charakterisieren, und des Ergebnisses von dem dreidimensionalen Lokalisierungsmodul;
- einen vierten Schritt, der eine globale Spur anhand der Ergebnisse der vorherigen Prüfungen initialisiert;
- einen fünften Schritt, der das Ansammeln, auf der initialisierten globalen Spur, von elementaren Spuren beinhaltet, die von bistatischen Basen kommen, die nicht an der Initialisierung der globalen Spur beteiligt sind.

4. Verfahren nach einem der vorherigen Ansprüche, **dadurch gekennzeichnet, dass** das Lokalisierungsmodul (64) des zweiten stromabwärtigen Fusionierungsschritts (24) Folgendes beinhaltet: Annähern der Schnittzone an die Lokalisierungsellipsoide durch eine Nebeneinanderstellung von Blöcken, wobei jeder Block einem Parallelepiped entspricht, das durch die Position seines Mittelpunkts und die Breite jeder seiner Seiten gekennzeichnet ist, wobei die Vereinigung dieser Blöcke die Schnittzone umfasst, und Extrahieren eines mittleren Positionswertes und einer assoziierten Kovarianzmatrix von der Gesamtheit der Blöcke, die den Bereich umfassen, wobei jeder Block mit einer Wahrscheinlichkeit assoziiert ist, die seine Kohärenz relativ zu den bistatischen Distanzen am Ursprung der Schnittzone charakterisiert.

5. Verfahren nach einem der vorherigen Ansprüche, **dadurch gekennzeichnet, dass** das Modul (63) zum Warten der globalen Spuren des zweiten stromabwärtigen Fusionierungsschritts (24) das Berechnen der statistischen Distanz $\gamma$ implementiert, die die Projektion einer globalen Spur in einer bistatischen Basis b und einer elementaren Spur derselben bistatischen Basis trennt, die ein Kandidat für die Fusionierung ist, wobei die statische Distanz $\gamma$ von den bistatischen, Distanz-, Geschwindigkeits- und Azimut-Komponenten abhängig ist, die die elementare Kandidatenspur für die Assoziation und die Komponenten der Projektion des Zustands x der globalen Spur in der bistatischen Basis b charakterisieren.

6. Verfahren nach einem der vorherigen Ansprüche, **dadurch gekennzeichnet, dass** das nichtlineare Filterungsmodul (65) des zweiten stromabwärtigen Fusionierungsschritts (24) für jeden Messzeitpunkt k zur Prädiktion $\tilde{x}_k$ der Komponenten des Zustandsvektors x übergeht, entsprechend jeder globalen Spur auf der Basis der Schätzung $\hat{x}_{k-1}$ der Komponenten des Zustandsvektors x zum Zeitpunkt k-1, wobei diese Schätzung wiederum auf der Basis des Beobachtungsvektors $y_{k-1}$ durchgeführt wird, erzeugt mit Hilfe der Messwerte mit Bezug, für den Zeitpunkt k-1, auf die elementaren Spuren, die mit der betrachteten globalen Spur assoziiert sind, und der Prädiktion $\tilde{x}_{k-1}$ der Komponenten des Zustandsvektors x zum Zeitpunkt k-1, wobei die Komponenten des Beobachtungsvektors aus dem Ergebnis der Fusionierung der bistatischen Distanzen jeder elementaren Spur zusammengesetzt sind, erzeugt im Lokalisierungsmodul (64) für die globalen Spuren des stromabwärtigen Fusionierungsschritts (24) und der bistatischen Geschwindigkeiten dieser elementaren Spuren, die nach Abschluss des stromaufwärtigen Fusionierungsschritts (23) erhalten werden.

## Claims

1. A tracking method for multi-channel passive radar systems, said system comprising a receiver using the transmissions generated by a plurality of transmitters of opportunity, each transmitter forming a bistatic base with the receiver, the transmission generated by each of the transmitters having a spectrum formed by various frequency channels, the processing of which results in the formation of blips at each instant, each blip being **characterised by** a vector with three components consisting of a bistatic distance measurement, a bistatic speed measurement and an azimuth measurement, as well as by the 3x3 diagonal matrix of errors associated with these measurements, **characterised in that** it comprises:

- a first upstream combining step (23) applied separately to each bistatic base (22), operating directly in the space of the components of the vectors characterising the blips and implementing an operation (22) for forming elementary tracks, identifying blips from the various frequency channels (21) relating to the same target and instantaneously combining these blips, the operation (22) for forming elementary tracks itself comprising the following sub-steps for each measurement instant:
- a first sub-step (221) of combining blips for associating the elementary blips of the various reception channels of each bistatic base that have, for a given measurement instant, measurement vectors $y_j$ that are close to each other and form combined blips, each combined blip j (25) being **characterised by** a measurement vector $y_j = (r_b, v_b, \theta)$, where $r_b$, $v_b$ and $\theta$ respectively represent the bistatic distance, bistatic speed and azimuth measurements of the object detected by the considered bistatic base;

- a second sub-step (222) of constructing elementary tracks from the combined blips, an elementary track being formed by the temporal succession of the combined blips that relate to the same target, each detected target being represented by an elementary bistatic track (25), the characteristics (attributes) of which evolve over time as a function of the blips that are associated therewith;

- the sub-step (221) of combining blips comprising a module (31) for aggregating blips, which module associates the elementary blips of the various reception channels of each of the same bistatic base, which channels exhibit, for a given measurement instant, measurement vectors $y_j$ that are close to each other, taking into account the levels of precision of the measurements, and forming combined blips, the aggregation of two elementary blips p1 and p2 is completed if the measurement vectors y1 and y2 characterising these blips verify the proximity criterion that is defined by the following three relations:

$$\left[ r_b^{p1} - 2\sigma_{r_b^{p1}}; r_b^{p1} + 2\sigma_{r_b^{p1}} \right] \cap \left[ r_b^{p2} - 2\sigma_{r_b^{p2}}; r_b^{p2} + 2\sigma_{r_b^{p2}} \right] \neq \varnothing$$

and

$$\left[ v_b^{p1} - 2\sigma_{v_b^{p1}}; v_b^{p1} + 2\sigma_{v_b^{p1}} \right] \cap \left[ v_b^{p2} - 2\sigma_{v_b^{p2}}; v_b^{p2} + 2\sigma_{v_b^{p2}} \right] \neq \varnothing$$

and

$$\left[ \theta^{p1} - 2\sigma_{\theta^{p1}}; \theta^{p1} + 2\sigma_{\theta^{p1}} \right] \cap \left[ \theta^{p2} - 2\sigma_{\theta^{p2}}; \theta^{p2} + 2\sigma_{\theta^{p2}} \right] \neq \varnothing$$

where $\left( \sigma_{r_b^{p1}}; \sigma_{v_b^{p1}}, \sigma_{\theta^{p1}} \right)$ and $\left( \sigma_{r_b^{p2}}; \sigma_{v_b^{p2}}, \sigma_{\theta^{p2}} \right)$ respectively represent the components of the covariance matrices R associated with the measurement vectors $y_j(r_b, v_b, \theta)$ of the considered blips; with

$$R = \begin{pmatrix} \sigma_{r_b}^2 & 0 & 0 \\ 0 & \sigma_{v_b}^2 & 0 \\ 0 & 0 & \sigma_\theta^2 \end{pmatrix},$$

and $r_b$, $v_b$ and $\theta$ respectively represent the bistatic distance, bistatic speed and azimuth measurements that characterise the considered blip Pi;

- a second step (24) of downstream combining generating a global track (26) from elementary tracks (25) relating to the same target, which is detected simultaneously by a plurality of bistatic bases, the second step implementing:

- a module (62) for initialising global tracks, a global track being initialised by associating two elementary tracks generated by two distinct bistatic bases (62);

- a module (63) for maintaining formed global tracks, the enhancement being completed by searching elementary tracks generated by other bistatic bases likely to be associated with an existing global track, the elementary tracks that are able to be associated with a given global track being determined by projecting the attributes of the considered global track into each of the reference coordinate systems of the bistatic bases, for which none of the elementary tracks has yet been associated with the considered global track and by comparing, for each of these bistatic bases, the values of attributes projected from the global track with the attributes of the various relative elementary tracks 5 on the considered bistatic base;

- an operation for combining bistatic information of the various combined elementary tracks, firstly comprising implementing a localisation module (64) using the bistatic distances of the elementary tracks to determine an estimate of the position of the global track from ellipsoids that correspond to these bistatic distances, then, secondly, implementing a non-linear filtering module (65) that simultaneously uses the completed position estimate and the bistatic speeds that characterise the elementary tracks that help to maintain the global track.

2. The method according to claim 1, **characterised in that** the step 221 of combining blips further comprises the following modules:

- a second module (32) for combining aggregated elementary blips, which generates, for each aggregate, a single resulting measurement vector $y(r_b, v_b, \theta)$ from the measurement vectors $y_j(r_b, v_b, \theta)$ of the blips forming the aggregate, with y being defined by the following relations:

$$y = R\sum_{j=1}^{N}R_j^{-1}y_j \ \text{ and } \ R = \left(\sum_{j=1}^{N}R_j^{-1}\right)^{-1},$$

where $R_j$ represents the covariance matrix associated with the measurement vector $y_j$, the combined blip being used to form a given elementary track;
- a third module (34) that controls the state of the elementary tracks formed to determine the likelihood of an elementary track by considering the number of elementary blips forming the aggregate that is the origin of the combined blip used to form the track.

3. The method according to any one of the preceding claims, **characterised in that** the module (62) for initialising the downstream combining step (24) successively comprises the following five steps:

- a first step that tests the azimuthal coherence of the candidate elementary tracks by computing the difference in the azimuths and by comparing them with a given threshold;
- a second step that tests the distance coherence of the candidate elementary tracks, said step implementing a rough test that is based on the analytical computation of the intersection of two localisation ellipsoids and a precise test that is based on a three-dimensional localisation that allows the initial position of the global track to be initialised;
- a third step that tests the speed coherence of the candidate elementary tracks, by computing the initial Cartesian speed of the global track to be initialised, on the basis of bistatic speeds that characterise the two candidate bistatic tracks and of the result from the three-dimensional localisation module;
- a fourth step that initialises a global track from the results of the previous tests;
- a fifth step that comprises aggregating, with the initialised global track, elementary tracks coming from bistatic bases not involved during the initialisation of the global track.

4. The method according to any one of the preceding claims, **characterised in that** the localisation module (64) of the second downstream combining step (24) involves approaching the area of intersection of the localisation ellipsoids through a juxtaposition of blocks, each block corresponding to a parallelepiped that is **characterised by** the position of its centre and the width of each of its sides, the union of these blocks encompassing the area of intersection, and extracting a mean position value and an associated covariance matrix from all the blocks that encompass the area, each block being associated with a likelihood that characterises its coherence relative to the bistatic distances that are the origin of the area of intersection.

5. The method according to any one of the preceding claims, **characterised in that** the module (63) for maintaining the global tracks of the second downstream combining step (24) implements the computation of the statistical distance $\gamma$ separating the projection of a global track in a bistatic base b and an elementary track of said bistatic base, which is a candidate for the combination, the static distance $\gamma$ being a function of the bistatic, distance, speed and azimuth components that characterise the candidate elementary track for the association and the components of the projection of the state x of the global track in the bistatic base b.

6. The method according to any one of the preceding claims, **characterised in that** the non-linear filtering module (65) of the second downstream combining step (24) proceeds, for each measurement instant k, to the prediction $\tilde{x}_k$ of the components of the state vector x that corresponds to each global track based on the estimate $\hat{x}_{k-1}$ of the components of the state vector x at the instant k-1, this estimate itself being carried out on the basis of the observation vector $y_{k-1}$ generated by means of the measurements relating, for the instant k-1, to the elementary tracks that are associated with the considered global track and the prediction $\tilde{x}_{k-1}$ of the components of the state vector x at the instant k-1, the components of the observation vector being made up of the result of the combination of the bistatic distances of each elementary track, generated in the localisation module (64) for the global tracks of the downstream combining step (24), and of the bistatic speeds of said elementary tracks that are obtained on completion of the upstream combining step (23).

Fig. 1

Base bistatique 1        Base bistatique N

21

Canal 1    Canal n        Canal 1    Canal m

21           21           21        22

221

| Fusion des plots élémentaires | 22 | Fusion de plots élémentaires |

222

| Pistage élémentaire base 1 | | Pistage élémentaire Base N | 23 |

25    Mesures Pistes élémentaires Base 1        Mesures Pistes élémentaires Base N    25

Pistage global

Module de localisation

24

26

Liste des pistes Globales

# Fig. 2

Fig. 3

35 — Liste de Plots fusionnés

222

42 — Initialisation de pistes élémentaires

43 — Association plots fusionnés – pistes élémentaires

Module de Gestion

41

44 — Pistage - Entretien des pistes

Plots fusionnés - mesures Pistes élémentaires

25

# Fig. 4

Fig. 5

25

mesures
pistes
élémentaires

24

Initialisation de
pistes globales

62

Association
pistes élémentaires
– pistes globales

63

Module de
Gestion

61

Module de
Localisation

64

Pistage

65

Table des
Pistes
globales

26

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004075605 A
- FR 0610961